(19) Europäisches Patentamt / European Patent Office / Office européen des brevets

(11) **EP 3 203 737 A1**

(12) **DEMANDE DE BREVET EUROPEEN**

(43) Date de publication:
**09.08.2017 Bulletin 2017/32**

(51) Int Cl.:
*H04N 19/105* [(2014.01)]     *H04N 19/593* [(2014.01)]
*H04N 19/132* [(2014.01)]     *H04N 19/136* [(2014.01)]
*H04N 19/182* [(2014.01)]

(21) Numéro de dépôt: **16182678.9**

(22) Date de dépôt: **04.08.2016**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**MA MD**

(30) Priorité: **02.02.2016 FR 1650814**

(71) Demandeur: **STMicroelectronics (Grenoble 2) SAS**
**38000 Grenoble (FR)**

(72) Inventeurs:
• **BONA, Mariano**
  **38100 GRENOBLE (FR)**
• **LEBOWSKY, Fritz**
  **38410 SAINT MARTIN D'URIAGE (FR)**

(74) Mandataire: **Casalonga**
**Casalonga & Partners**
**Bayerstraße 71/73**
**80335 München (DE)**

(54) **PROCÉDÉ ET DISPOSITIF D'ENCODAGE D'UN SIGNAL NUMÉRIQUE MULTIDIMENSIONNEL, EN PARTICULIER UN SIGNAL D'IMAGE, ET PROCÉDÉ ET DISPOSITIF CORRESPONDANTS DE DÉCODAGE**

(57)     Procédé d'encodage d'un signal numérique initial (SIM) en un signal encodé (SIC), le signal numérique initial comportant une séquence d'échantillons représentant un espace multidimensionnel, chaque échantillon étant affecté d'au moins une grandeur physique, le procédé comprenant pour certains au moins des échantillons courants des encodages localisés (20) du signal en des signaux numériques locaux encodés, ces encodages étant effectués dans des repères locaux (RLC) incluant chacun l'échantillon courant considéré et deux échantillons de référence choisis, sur la base d'un gradient minimal de ladite au moins une grandeur physique, parmi les échantillons disponibles de ladite séquence, le signal encodé (SIC) comportant lesdits signaux numériques locaux encodés (SICL).

FIG.2

EP 3 203 737 A1

**Description**

Des modes de mise en oeuvre et de réalisation de l'invention concernent l'encodage, et plus particulièrement la compression, de données numériques, et notamment l'encodage d'un signal numérique représentant un espace multidimensionnel, par exemple un signal d'image.

Cela étant, d'autres signaux multidimensionnels peuvent être envisagés comme par exemple des signaux audio multicanaux.

Généralement, dans le contexte de traitement d'image, une trame d'image à afficher sur un écran, par exemple un écran de téléviseur, est représentée par une structure matricielle d'information numérique représentant une grille de pixels et, à chaque pixel sont affectées plusieurs composantes couleur, par exemple les composantes de luminosité Y et de chrominance Cr et Cb possédant chacune un niveau ou amplitude pour le pixel considéré. Une telle structure de pixels ou « bitmap », correspond donc bit pour bit ou pixel par pixel, à l'image (on parle alors d'image « raster ») qui doit être affichée sur l'écran. Et, généralement, la structure de pixels est généralement dans le même format que celui utilisé pour le stockage dans la mémoire vidéo de l'écran. Et, la trame raster ainsi stockée dans la mémoire vidéo sera lue pixel par pixel sur une ligne et ligne par ligne. On parle alors de « raster scan ».

Actuellement, la taille des trames utilisées pour la télévision numérique haute définition, dite HDTV, est une taille dite «2k1k » c'est-à-dire comportant 1080 lignes de 1920 pixels. Par ailleurs, la fréquence, c'est-à-dire le nombre de trames par seconde, est de 60 Hz.

Pour transmettre un tel signal d'image délivré par le décodeur TV, sur la liaison filaire reliant ce décodeur au téléviseur, il est nécessaire d'effectuer une compression du signal d'image délivré par le décodeur. En effet, transmettre un tel signal d'image sans compression requiert des vitesses de transfert extrêmement élevées qui sont généralement coûteuses et créent des interférences électromagnétiques.

C'est la raison pour laquelle on effectue une compression du signal délivré par le décodeur.

Des traitements de compression/décompression peuvent également être nécessaires pour le stockage des images dans une mémoire interne ou externe au décodeur.

En effet, un signal vidéo est généralement reçu dans un format encodé, par exemple selon les normes H264 ou HEVC, puis est décodé dans un format d'image du type RGB ou $YC_bC_r$ plus volumineux en espace mémoire.

Or, divers traitements sont usuellement appliqués aux images décodées. Et, entre chaque traitement, les images sont stockées, par exemple dans des mémoires tampon, dans le format décodé. Afin de limiter la capacité des mémoires utilisées, il est avantageux de réaliser une compression des images décodées avant stockage dans la mémoire puis une décompression lors de la lecture dans la mémoire avant traitement.

De telles compressions/décompressions ne doivent pas introduire de dégradation des images.

Actuellement, une compression classique d'un signal vidéo peut être effectuée en appliquant un filtre passe-bas bidimensionnel sur les composantes de chrominance du signal d'image. Cependant, même si la qualité de l'image finalement affichée sur l'écran reste acceptable, des informations haute fréquence du signal d'image peuvent être perdues.

Selon un mode de mise en oeuvre et de réalisation, il est proposé un procédé et un dispositif d'encodage/décodage d'un signal multidimensionnel, conduisant avantageusement à une compression/décompression du signal multidimensionnel, permettant de préserver les performances spectrales dans toute la bande de fréquence du signal (absence de filtre linéaire) tout en n'étant pas significativement impactés par un bruit blanc gaussien.

Dans le domaine vidéo, il est ainsi proposé un procédé et un dispositif d'encodage/décodage, se traduisant avantageusement par compression/décompression, permettant de réduire les dégradations visibles de l'image affichée.

Il est également proposé un procédé et un dispositif d'encodage permettant d'augmenter significativement le taux de compression pour atteindre au minimum par exemple un taux de compression de 3X.

Selon un aspect, il est proposé un procédé d'encodage d'un signal numérique initial, par exemple un signal d'image, en un signal encodé. Le signal numérique initial comporte une séquence d'échantillons, par exemple des pixels, représentant un espace multidimensionnel, par exemple une image.

Chaque échantillon est affecté d'au moins une grandeur physique. Dans le cas d'un signal d'image, chaque pixel est affecté par exemple de composantes couleurs qui forment lesdites grandeurs physiques.

Dans le cas d'un signal audio multicanaux, les grandeurs physiques de chaque échantillon audio peuvent être les niveaux sonores de chacun desdits canaux.

Dans le cas d'une application vidéo, la séquence de pixels peut être une trame complète de l'image ou bien un macrobloc, par exemple de 64x64 pixels, de l'image, les macroblocs arrivant alors séquentiellement. La séquence de pixels peut également s'entendre comme étant une succession des pixels de la trame de l'image, ces pixels arrivant séquentiellement et ligne par ligne, conformément au format « raster ».

Le procédé comprend, pour certains au moins des échantillons courants, des encodages localisés du signal en des signaux numériques locaux encodés, ces encodages étant effectués dans des repères locaux incluant chacun l'échantillon courant considéré et deux échantillons de référence choisis, sur la base d'un gradient minimal de ladite au moins une grandeur physique, parmi les échantillons disponibles de ladite séquence, le signal encodé comportant lesdits signaux numériques locaux encodés.

Les échantillons disponibles de la séquence peuvent être tout ou partie des échantillons déjà reçus, par exemple des échantillons étant déjà arrivés si l'on considère un format « raster » ou bien des échantillons du macrobloc arrivé et comportant ledit échantillon courant. Par ailleurs ces échantillons disponibles peuvent ou non avoir déjà subi un encodage localisé. Ces échantillons disponibles peuvent être des échantillons voisins ou non de l'échantillon courant ou bien des échantillons plus éloignés de cet échantillon.

Le choix de la taille de la zone contenant les échantillons disponible résulte notamment d'un compromis entre la complexité de traitement et la précision souhaitée pour le signal encodé.

Le gradient d'une grandeur physique affectée à un échantillon courant s'entend par exemple comme la variation du niveau de cette grandeur physique vue au niveau de cet échantillon courant, c'est-à-dire comme la différence entre le niveau de ladite grandeur physique affectée à l'échantillon courant et le niveau de cette même grandeur physique affectée à un autre échantillon, par exemple un échantillon voisin de cet échantillon courant.

Ainsi, il est avantageusement proposé un encodage localisé utilisant une séparation de l'information véhiculée par le signal, par exemple l'information couleur de d'image, en une paire de composants à savoir une amplitude de gradient et une structure (repère local). La paire amplitude de gradient/structure est calculée échantillon par échantillon (par exemple pixel par pixel) en recherchant la paire ayant l'erreur minimale dans une zone de d'échantillons candidats disponible, par exemple une zone localisée dans le voisinage de l'échantillon courant.

En pratique, les caractéristiques de l'encodage localisé du signal sont de préférence choisies pour que le nombre de bits de chaque signal numérique local encodé soit inférieur au nombre de bits sur lequel est représenté le niveau de la grandeur physique considérée.

Par exemple si les grandeurs physiques sont représentées par des mots de 10 à 16 bits, on choisira de préférence les caractéristiques de l'encodage localisé de façon à obtenir un signal encodé local sur un nombre de bits inférieur ou égal à 9, voire sur un nombre de bits bien plus faible.

Ainsi l'encodage localisé se traduit alors par une compression localisée.

Cela étant, il est possible que dans certaines applications, par exemple pour des grandeurs physiques représentées par des mots de 8 bits, l'encodage localisé conduise pour certains échantillons à un signal numérique local encodé sur un nombre de bits supérieur 8, par exemple 9 bits. Cependant il s'avère que pour d'autres échantillons le signal local peut être encodé sur un nombre de bits beaucoup plus faible, par exemple 3 bits, conduisant ainsi néanmoins globalement pour le signal encodé global en un signal compressé.

Selon un mode de mise en oeuvre, chaque encodage localisé comporte pour chaque grandeur physique affectée à l'échantillon courant considéré, un paramétrage numérique dudit repère local et du niveau de la grandeur physique considérée dans ledit repère local de façon à obtenir le signal encodé local associé à l'échantillon courant et à la grandeur physique considérée.

Selon un mode de mise en oeuvre, chaque encodage localisé comporte pour chaque grandeur physique affectée à l'échantillon courant considéré, une détermination du repère local formé par ledit échantillon courant et les deux échantillons de référence sélectionnés au moins à partir d'une détermination du gradient ayant la plus faible valeur absolue parmi les gradients de la grandeur physique considérée entre ledit échantillon courant et au moins deux échantillons disponibles, par exemple deux échantillons voisins de cet échantillon courant.

Selon un mode de mise en oeuvre, un premier échantillon de référence dudit repère local est sélectionné au moins à partir de ladite détermination du gradient ayant la plus faible valeur absolue parmi les gradients de la grandeur physique considérée, et le deuxième échantillon de référence est

un échantillon disponible restant formant avec ledit premier échantillon de référence et l'échantillon courant un angle droit, ou

un échantillon disponible restant sélectionné au moins à partir de ladite détermination du gradient ayant la plus grande valeur absolue parmi les gradients de la grandeur physique considérée.

Lorsque chaque échantillon est affecté de plusieurs grandeurs physiques, comme c'est le cas par exemple pour un pixel affecté de plusieurs composantes couleurs, il est possible de déterminer un repère local pour chaque grandeur physique associée à cet échantillon courant.

Cela étant, en pratique, il est préférable pour des raisons de simplicité, de déterminer, pour chaque échantillon courant, un repère local unique valable pour toutes les grandeurs physiques affectées à cet échantillon courant.

Selon un mode de mise en oeuvre, la détermination dudit repère local comprend pour chaque échantillon courant appartenant à un groupe d'au moins trois échantillons incluant ledit échantillon courant et au moins deux échantillons disponibles, par exemple deux échantillons voisins de cet échantillon courant,

une première étape de détermination comportant pour chaque grandeur physique, une détermination des gradients de cette grandeur physique entre ledit échantillon courant et chaque échantillon disponible,

une étape de sélection du premier échantillon de référence comportant une sélection parmi lesdits échantillons disponibles, de l'échantillon disponible dont le gradient associé a la plus faible valeur absolue parmi tous les gradients calculés pour toutes les grandeurs physiques,

une deuxième étape de détermination du deuxième échantillon de référence comportant une détermination parmi les échantillons disponibles restants, de l'échantillon disponible formant avec ledit premier échantillon de référence et l'échantillon courant un angle droit ou correspondant à l'échantillon disponible dont le gradient associé a la plus grande valeur absolue parmi tous les gradients calculés pour toutes les grandeurs physiques.

Selon un mode avantageux de mise en oeuvre, particulièrement bien adapté à un « raster scan », pour chaque échantillon courant ledit groupe inclut ledit échantillon courant et quatre échantillons voisins ayant déjà donné lieu à l'établissement des signaux numériques locaux encodés associés à ces échantillons voisins, et le deuxième échantillon de référence est celui qui forme un angle droit avec le premier échantillon de référence et l'échantillon courant.

Selon un mode de mise en oeuvre, le paramétrage du repère local comprend une élaboration d'un groupe de premiers bits, par exemple deux bits, dont les valeurs définissent la structure du repère local parmi un ensemble de structures possibles.

Selon un mode de mise en oeuvre, le paramétrage du niveau de la grandeur physique considérée dans le repère local comprend une détermination d'un bit de polarité dont la valeur indique au moins le positionnement du niveau de la grandeur physique considérée affectée à l'échantillon courant par rapport au niveau de ladite grandeur physique affectée au premier échantillon de référence. On verra plus en détails ci-après que dans certains cas ce bit de polarité peut indiquer en outre si le niveau de la grandeur physique considérée affectée à l'échantillon courant se situe ou non entre le niveau de ladite grandeur physique affectée au premier échantillon de référence et le niveau de ladite grandeur physique affectée au deuxième échantillon de référence.

Selon un mode de mise en oeuvre, le paramétrage du niveau de la grandeur physique considérée dans le repère local comprend

une élaboration d'un paramètre faisant intervenir au moins la valeur absolue du gradient, dit premier gradient, de ladite grandeur physique entre l'échantillon courant et le premier échantillon de référence,

une comparaison de ce paramètre à un seuil, et

une élaboration d'un troisième bit représentatif du résultat de ladite comparaison.

Comme on le verra plus en détail ci-après, ce paramètre peut être par exemple la valeur absolue du premier gradient lui-même ou bien un gradient normalisé.

L'utilisation d'un gradient normalisé apporte plus de précisions et une meilleure qualité d'image mais nécessite d'effectuer une division au sein de l'encodeur. L'utilisation de la valeur absolue du seul premier gradient est plus simple à mettre en oeuvre et s'avère suffisante dans la plupart des applications.

Quel que soit le choix effectué pour ledit paramètre, si le paramètre est inférieur ou égal audit seuil, il est avantageusement considéré comme nul. Et dans ce cas, comme on le verra plus en détails ci-après, cela conduit à un signal local encodé sur un très faible nombre de bits, par exemple 3 bits, ce qui conduit à un taux de compression élevé.

Et si l'on choisit ledit seuil de telle sorte que pour un très grand nombre d'échantillons, par exemple 90 % des échantillons, ledit paramètre soit nul, alors on peut obtenir un taux de compression intéressant.

Par ailleurs le paramétrage du niveau de la grandeur physique considérée dans le repère local comprend en outre avantageusement un encodage compressif sur un groupe de deuxièmes bits dudit paramètre de façon à obtenir un paramètre compressé.

Comme indiqué précédemment, selon une variante possible, le bit de polarité indique si le niveau de la grandeur physique considérée affectée à l'échantillon courant se situe ou non entre le niveau de ladite grandeur physique affectée au premier échantillon de référence et le niveau de ladite grandeur physique affectée au deuxième échantillon de référence, et le paramétrage du niveau de la grandeur physique considérée dans le repère local comprend en outre une détermination de la valeur absolue du gradient, dit deuxième gradient, de ladite grandeur physique entre l'échantillon courant et le deuxième échantillon de référence,

une détermination d'un gradient normalisé à partir des valeurs absolues du premier gradient et du deuxième gradient, ledit gradient normalisé formant ledit paramètre.

Selon une autre variante possible, le bit de polarité indique si le niveau de la grandeur physique considérée affectée à l'échantillon courant est inférieur ou bien supérieur au niveau de ladite grandeur physique affectée au premier échantillon de référence, et la valeur absolue du premier gradient forme ledit paramètre.

Selon un mode de mise en oeuvre, compatible avec notamment les deux variantes mentionnées ci-avant, le signal numérique local encodé associé à la grandeur physique considérée affectée à l'échantillon courant comprend au moins le troisième bit, c'est-à-dire le bit représentatif du résultat de la comparaison entre le paramètre et le seuil.

Cela étant le signal numérique local encodé associé à la grandeur physique considérée affectée à l'échantillon courant peut comprendre le groupe de premiers bits (représentatifs de la structure du repère local) et éventuellement, le paramètre compressé ainsi que le bit de polarité.

Plus précisément, si ledit paramètre est inférieur ou égal audit seuil, le signal numérique local encodé contient alors avantageusement uniquement le groupe de premiers bits et le troisième bit, et si le paramètre est supérieur audit seuil, le signal numérique local encodé contient alors avantageusement le groupe de premiers bits, le paramètre compressé, le bit de polarité et le troisième bit.

Dans une optique d'estimation itérative d'erreur, il est avantageux que le paramétrage du niveau de la grandeur physique considérée dans le repère local comprenne en outre

une élaboration à partir du paramètre compressé d'un premier mot numérique complémentaire compressé et d'un deuxième mot numérique complémentaire compressé encadrant le paramètre compressé,

un décodage décompressif du premier mot numérique complémentaire compressé, une reconstruction du niveau de ladite grandeur physique à partir du premier mot numérique complémentaire décodé de façon à obtenir un premier niveau reconstruit pour ladite grandeur physique,

une élaboration d'une première erreur entre le niveau de grandeur physique considérée et ledit premier niveau reconstruit,

un décodage décompressif du deuxième mot numérique compressé,

une reconstruction du niveau de ladite grandeur physique à partir du deuxième mot numérique complémentaire décodé de façon à obtenir un deuxième niveau reconstruit pour ladite grandeur physique,

une élaboration d'une deuxième erreur entre le niveau de grandeur physique considérée et ledit deuxième niveau reconstruit,

une sélection de celui du premier ou du deuxième mot numérique complémentaire compressé qui donne l'erreur la plus faible parmi la première erreur et la deuxième erreur, et

si le paramètre est inférieur ou égal audit seuil, il est alors considéré comme nul, et le signal numérique local encodé contient alors uniquement le groupe de premiers bits et le troisième bit, tandis que si le paramètre est supérieur audit seuil, le signal numérique local encodé contient alors le groupe de premiers bits, le mot numérique complémentaire compressé sélectionné, le bit de polarité et le troisième bit.

En d'autres termes dans ce cas on remplace le paramètre compressé (c'est-à-dire par exemple le premier gradient compressé ou le gradient normalisé compressé) par le mot numérique complémentaire compressé sélectionné, c'est-à-dire celui qui conduit à l'erreur la plus faible.

De façon à permettre une diffusion d'erreur, le paramétrage du niveau de la grandeur physique considérée dans le repère local peut comprendre en outre avantageusement une adjonction d'une quantité pseudo-aléatoire sur le paramètre ou sur le paramètre compressé.

Dans certains cas, la séquence d'échantillon peut être subdivisée en plusieurs sous-séquences. C'est par exemple le cas lorsque le signal est un signal vidéo codé en format $YC_bC_r$ 420. La première sous-séquence peut alors comporter les échantillons affectés des composantes $YC_bC_r$. La deuxième sous-séquence peut être composée des échantillons situés entre les échantillons de la première sous-séquence et la troisième sous-séquence peut être composée des échantillons affectés de la composante Y et entourée par les échantillons de la deuxième sous-séquence.

On peut alors effectuer des compressions localisées en parallèle ou séquentiellement sur chacune de ces sous-séquences.

De façon à obtenir une tolérance constante lors des encodages localisés, il peut être avantageux que le signal initial sur lequel on effectue ces encodages localisés, résulte d'un prétraitement effectué sur un signal de base, ce prétraitement comportant par exemple un traitement de pré-accentuation (« pre-emphasis » en langue anglaise).

Selon un autre aspect, il est proposé un procédé de décodage d'un signal numérique en un signal décodé, le signal numérique ayant été encodé par le procédé d'encodage tel que défini ci-avant, le procédé de décodage comprenant pour chaque échantillon courant et pour chaque grandeur physique, une élaboration du niveau de la grandeur physique considérée à partir du signal numérique local encodé associé à cet échantillon courant, de façon à délivrer un signal local décodé, le signal décodé comportant lesdits signaux locaux décodés.

Lorsque le signal numérique initial a été encodé à la suite d'un traitement de pré-accentuation, il est avantageux d'effectuer un post-traitement sur le signal décodé, ce post-traitement comportant un traitement de désaccentuation (« de-emphasis » en langue anglaise).

Selon un autre aspect, il est proposé un dispositif d'encodage d'un signal numérique initial en un signal encodé, le signal numérique initial comportant une séquence d'échantillons représentant un espace multidimensionnel, chaque échantillon étant affecté d'au moins une grandeur physique ; le dispositif d'encodage comprenant des moyens de traitement configurés pour effectuer, pour certains au moins des échantillons courants, des encodages localisés du signal en un signal numérique local encodé dans des repères locaux incluant chacun l'échantillon courant considéré et deux échantillons de référence choisis sur la base d'un gradient minimal de ladite au moins une grandeur physique, parmi les échantillons disponibles de ladite séquence, le signal encodé comportant lesdits signaux numériques locaux encodés.

Selon un mode de réalisation, les moyens de traitement sont configurés pour effectuer, pour chaque encodage localisé comporte pour chaque grandeur physique affectée à l'échantillon courant considéré, un paramétrage numérique dudit repère local et du niveau de la grandeur physique considérée dans ledit repère local de façon à obtenir le signal numérique local encodé associé audit échantillon courant considéré et à la grandeur physique considéré.

Selon un mode de réalisation, les moyens de traitement sont configurés pour effectuer, pour chaque encodage localisé comporte pour chaque grandeur physique affectée à l'échantillon courant considéré, une détermination du repère local formé par ledit échantillon courant et les deux échantillons de référence sélectionnés au moins à partir d'une détermination du gradient ayant la plus faible valeur absolue parmi les gradients de la grandeur physique considérée entre ledit échantillon courant et au moins deux échantillons disponibles.

Selon un mode de réalisation, les moyens de traitement sont configurés pour sélectionner un premier échantillon de référence dudit repère local au moins à partir de ladite détermination du gradient ayant la plus faible valeur absolue parmi les gradients de la grandeur physique considérée, et le deuxième échantillon de référence est

un échantillon disponible restant formant avec ledit premier échantillon de référence et l'échantillon courant un angle droit, ou

un échantillon disponible restant sélectionné au moins à partir de ladite détermination du gradient ayant la plus grande valeur absolue parmi les gradients de la grandeur physique considérée.

Selon un mode de réalisation, chaque échantillon est affecté de plusieurs grandeurs physiques et pour chaque échantillon courant, les moyens de traitement sont configurés pour déterminer un repère local unique valable pour toutes les grandeurs physiques affectées à cet échantillon courant.

Selon un mode de réalisation, les moyens de traitement sont configurés pour effectuer, pour chaque échantillon courant appartenant à un groupe d'au moins trois échantillons incluant ledit échantillon courant et au moins deux échantillons disponibles, la détermination locale dudit repère local comprenant

une première étape de détermination comportant pour chaque grandeur physique, une détermination des gradients de cette grandeur physique entre ledit échantillon courant et chaque échantillon disponible,

une étape de sélection du premier échantillon de référence comportant une sélection parmi lesdits échantillons disponibles, de l'échantillon disponible dont le gradient associé a la plus faible valeur absolue parmi tous les gradients calculés pour toutes les grandeurs physiques,

une deuxième étape de détermination du deuxième échantillon de référence comportant une détermination parmi les échantillons disponibles restants, de l'échantillon disponible formant avec ledit premier échantillon de référence et l'échantillon courant un angle droit ou correspondant à l'échantillon disponible dont le gradient associé a la plus grande valeur absolue parmi tous les gradients calculés pour toutes les grandeurs physiques.

Selon un mode de réalisation, pour chaque échantillon courant ledit groupe inclut ledit échantillon courant et quatre échantillons voisins ayant déjà donné lieu à l'établissement des blocs numériques associés à ces échantillons voisins, et le deuxième échantillon de référence est celui qui forme un angle droit avec le premier échantillon de référence et l'échantillon courant.

Selon un mode de réalisation, les moyens de traitement sont configurés pour effectuer, pour le paramétrage du repère local, une élaboration d'un groupe de premiers bits dont les valeurs définissent la structure du repère local parmi un ensemble de structures possibles.

Selon un mode de réalisation, les moyens de traitement sont configurés pour effectuer, pour le paramétrage du niveau de la grandeur physique considérée dans le repère local, une détermination d'un bit de polarité dont la valeur indique au moins le positionnement du niveau de la grandeur physique considérée affectée à l'échantillon courant par rapport au niveau de ladite grandeur physique affectée au premier échantillon de référence.

Selon un mode de réalisation, les moyens de traitement sont configurés pour effectuer, pour le paramétrage du niveau de la grandeur physique considérée dans le repère local, une élaboration d'un paramètre faisant intervenir au moins la valeur absolue du gradient, dit premier gradient, de ladite grandeur physique entre l'échantillon courant et le premier échantillon de référence, une comparaison de ce paramètre à un seuil, et une élaboration d'un troisième bit représentatif du résultat de ladite comparaison.

Selon un mode de réalisation, si le paramètre est inférieur ou égal audit seuil, il est considéré comme nul.

Selon un mode de réalisation, les moyens de traitement sont configurés pour effectuer, pour le paramétrage du niveau de la grandeur physique considérée dans le repère local, un encodage compressif sur un groupe de deuxièmes bits dudit paramètre de façon à obtenir un paramètre compressé.

Selon un mode de réalisation, le bit de polarité indique si le niveau de la grandeur physique considérée affectée à l'échantillon courant se situe ou non entre le niveau de ladite grandeur physique affectée au premier échantillon de référence et le niveau de ladite grandeur physique affectée au deuxième échantillon de référence, et les moyens de traitement sont configurés pour effectuer en outre, pour le paramétrage du niveau de la grandeur physique considérée dans le repère local,

une détermination de la valeur absolue du gradient, dit deuxième gradient, de ladite grandeur physique entre l'échantillon courant et le deuxième échantillon de référence,

une détermination d'un gradient normalisé à partir des valeurs absolues du premier gradient et du deuxième gradient, ledit gradient normalisé formant ledit paramètre.

Selon un autre mode de réalisation, le bit de polarité indique si le niveau de la grandeur physique considérée affectée à l'échantillon courant est inférieur ou égal ou bien supérieur au niveau de ladite grandeur physique affectée au premier échantillon de référence, et la valeur absolue du premier gradient forme ledit paramètre.

Selon un mode de réalisation, le signal numérique local encodé associé à la grandeur physique considérée affectée à l'échantillon courant comprend au moins le troisième bit.

Selon un mode de réalisation, le signal numérique local encodé associé à la grandeur physique considérée affectée à l'échantillon courant comprend le groupe de premiers bits et éventuellement, le paramètre compressé ainsi que le bit de polarité.

Selon un mode de réalisation, si ledit paramètre est inférieur ou égal audit seuil, le signal numérique local encodé contient alors uniquement le groupe de premiers bits et le troisième bit, et si le paramètre est supérieur audit seuil, le signal numérique local encodé contient alors le groupe de premiers bits, le paramètre compressé, le bit de polarité et le troisième bit.

Selon un mode de réalisation, les moyens de traitement sont configurés pour effectuer en outre, pour le paramétrage du niveau de la grandeur physique considérée dans le repère local,

une élaboration à partir du paramètre compressé d'un premier mot numérique complémentaire compressé et d'un deuxième mot numérique complémentaire compressé encadrant le paramètre compressé,

un décodage décompressif du premier mot numérique complémentaire compressé, une reconstruction du niveau de ladite grandeur physique à partir du premier mot numérique complémentaire décodé de façon à obtenir un premier niveau reconstruit pour ladite grandeur physique,

une élaboration d'une première erreur entre le niveau de grandeur physique considérée et ledit premier niveau reconstruit, un décodage décompressif du deuxième mot numérique compressé,

une reconstruction du niveau de ladite grandeur physique à partir du deuxième mot numérique complémentaire décodé de façon à obtenir un deuxième niveau reconstruit pour ladite grandeur physique,

une élaboration d'une deuxième erreur entre le niveau de grandeur physique considérée et ledit deuxième niveau reconstruit,

une sélection de celui du premier ou du deuxième mot numérique complémentaire compressé qui donne l'erreur la plus faible parmi la première erreur et la deuxième erreur, et

si le paramètre est inférieur ou égal audit seuil, il est alors considéré comme nul, et le signal numérique local encodé contient alors uniquement le groupe de premiers bits et le troisième bit, tandis que si le paramètre est supérieur audit seuil, le signal numérique local encodé contient alors le groupe de premiers bits, le mot numérique complémentaire compressé sélectionné, le bit de polarité et le troisième bit.

Selon un mode de réalisation, les moyens de traitement sont configurés pour effectuer en outre, pour le paramétrage du niveau de la grandeur physique considérée dans le repère local, une adjonction d'une quantité pseudo aléatoire sur ledit paramètre ou sur ledit paramètre compressé.

Selon un mode de réalisation, ladite séquence d'échantillons est subdivisée en plusieurs sous-séquences, et les moyens de traitement sont configurés pour effectuer les encodages locaux sur des échantillons courants appartenant à au moins une sous-séquence de ladite séquence.

Le signal numérique initial peut être un signal vidéo, chaque échantillon étant un pixel et chaque grandeur physique étant une composante couleur du pixel.

Selon un autre aspect, il est proposé un dispositif de décodage d'un signal numérique encodé par le dispositif d'encodage tel que défini ci-avant, configuré pour délivrer un signal décodé, comprenant des moyens de traitement configurés pour, pour chaque échantillon courant, effectuer une élaboration du niveau de la grandeur physique considérée à partir du signal numérique local encodé associé à cet échantillon courant, de façon à délivrer un signal local décodé, le signal décodé comportant lesdits signaux locaux décodés.

Selon un autre aspect il est proposé un produit programme d'ordinateur chargeable directement dans une mémoire d'un système informatique, comprenant des portions de code de logiciel pour l'exécution du procédé d'encodage tel que défini ci-avant ou du procédé de décodage tel que défini ci-avant, lorsque ledit programme est exécuté sur ledit système informatique.

Selon un autre aspect il est proposé un support lisible par un système informatique, ayant des instructions exécutables par ordinateur adaptées pour provoquer l'exécution par le système informatique du procédé d'encodage tel que défini ci-avant ou du procédé de décodage tel que défini ci-avant.

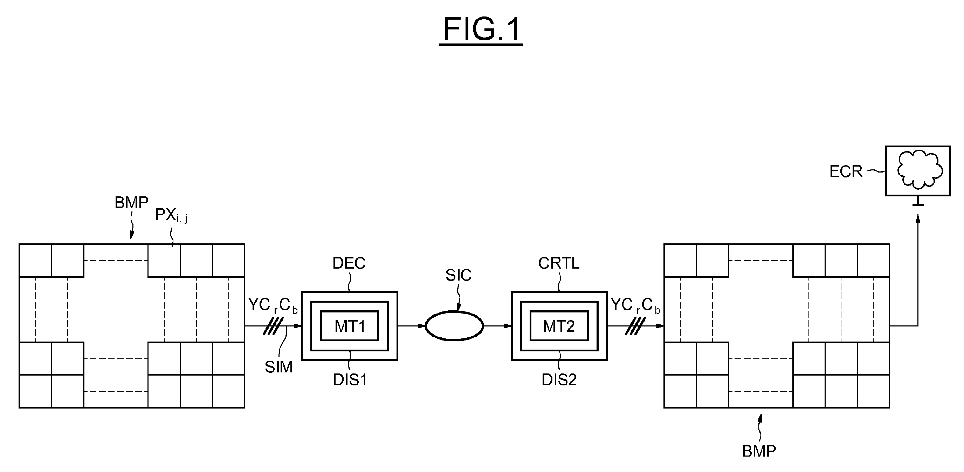

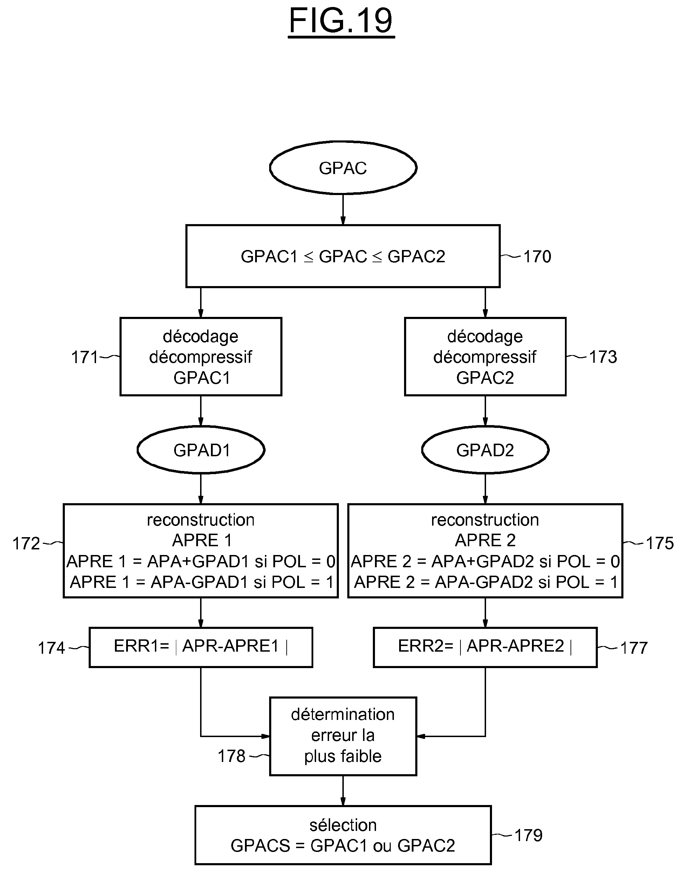

D'autres avantages et caractéristiques de l'invention apparaîtront à l'examen de la description détaillée de modes de mise en oeuvre et de réalisation, nullement limitatifs, et des dessins sur lesquels les figures 1 à 25 illustrent schématiquement différents modes de mise en oeuvre et de réalisation des procédés et dispositifs selon l'invention.

Sur la figure 1, la référence DIS1 désigne un dispositif d'encodage d'un signal d'image. Le dispositif DIS1 peut être incorporé dans un décodeur vidéo DEC, par exemple un décodeur TV conforme aux normes MPEG.

Le dispositif DIS1 reçoit un signal d'image initial SIM comportant une séquence BMP de pixels $PX_{i,j}$.

Chaque pixel est affecté de plusieurs composantes couleur numériques, ici trois composantes couleur, à savoir une composante de luminance Y, une composante de chrominance Cr et une autre composante de chrominance Cb.

La séquence BMP de pixels peut être une trame complète de l'image stockée dans une mémoire vidéo. En variante, les pixels de la trame de l'image peuvent être délivrés séquentiellement un par un et ligne par ligne (format « raster »). Les pixels de la séquence peuvent être également délivrés macrobloc par macrobloc. Dans ce cas, les macroblocs sont stockés dans une mémoire vidéo puis traités par le dispositif DIS1. Lorsque les pixels arrivent séquentiellement, dans un format du type raster, ils sont également stockés dans une mémoire vidéo de façon à être ultérieurement traités par le dispositif DIS1.

Le dispositif DIS1 comporte des moyens de traitement MT1 pour traiter le signal d'image SIM et délivrer, pour chaque composante couleur, un signal d'image encodé SIC. Ce signal d'image encodé est en pratique un signal d'image compressé.

Ce signal d'image SIC est ensuite délivré via par exemple une liaison filaire, à un contrôleur d'écran CTRL comportant un dispositif de décodage DIS2. Le signal SIC est traité par des moyens de traitement MT2 qui reconstituent la séquence BMP de pixels affectés des trois composantes couleurs Y, Cr, Cb en vue de l'affichage de l'image sur un écran ECR, par exemple un écran d'un téléviseur haute définition.

Les moyens de traitement MT1 et MT2 peuvent être réalisés par exemple par des circuits intégrés spécifiques (ASIC) ou bien par des modules logiciels au sein de processeurs, ces modules logiciels pouvant être stockés dans des mémoires programmes, par exemple du type mémoire morte (ROM, EEPROM..).

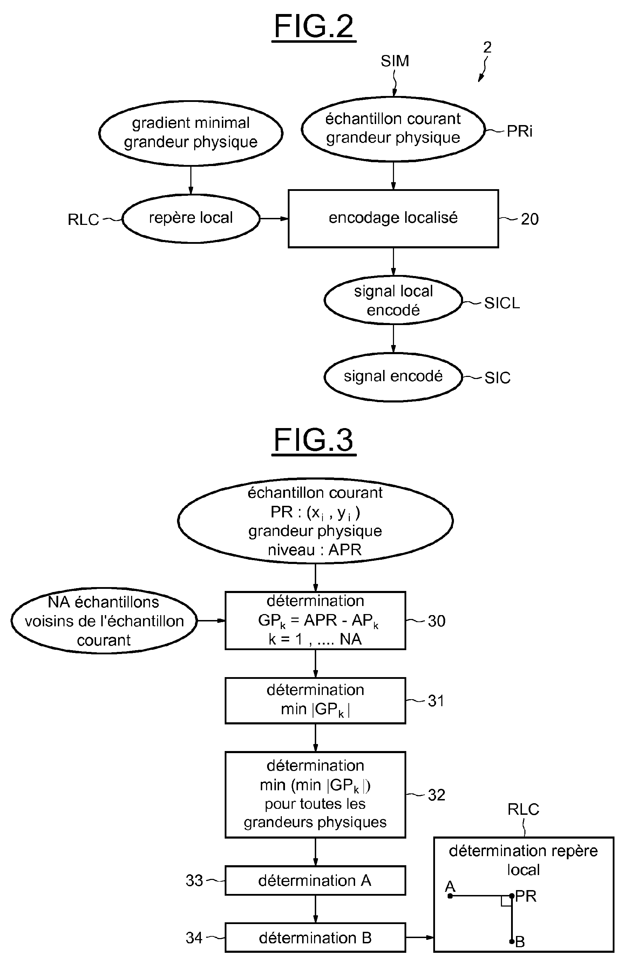

On va maintenant décrire plus en détail, en se référant plus particulièrement aux figures 2 et suivantes, un exemple de procédé d'encodage du signal d'image SIM selon l'invention mis en oeuvre par les moyens de traitement MT1 du dispositif d'encodage DIS1 incorporé dans le décodeur MPEG DEC.

D'une façon générale, comme illustré sur la figure 2, le procédé d'encodage 2 comporte, pour certains au moins des échantillons courants PRi du signal d'image SIM, et pour chaque grandeur physique affectée à cet échantillon courant, un encodage localisé 20 du signal, en l'espèce un encodage localisé du mot numérique représentant la grandeur physique considérée, dans un repère local RLC qui inclut l'échantillon courant et deux échantillons de référence qui sont choisis sur la base d'un gradient minimal de la grandeur physique considérée, parmi les échantillons disponibles de ladite séquence, par exemple au voisinage de l'échantillon courant.

On obtient alors, pour cette grandeur physique pour l'échantillon considéré, un signal numérique local encodé SICL. L'ensemble des signaux locaux encodés SICL associés à la grandeur physique considérée forment le signal d'image encodé SIC associé à la grandeur physique considérée.

On se réfère maintenant plus particulièrement à la figure 3 pour illustrer un mode de mise en oeuvre permettant de déterminer pour l'échantillon courant (pixel) considéré PR le repère local RLC.

On sélectionne NA échantillons disponibles de la séquence, que l'on suppose être dans cet exemple NA échantillons voisins de l'échantillon courant, NA étant au minimum égal à 2. Puis, on détermine dans l'étape 30, pour la grandeur physique considérée ayant le niveau (amplitude) APR pour le pixel PR, le gradient $GP_k$ de la grandeur physique considérée entre l'échantillon courant PR et l'échantillon voisin dont la grandeur physique a le niveau $AP_k$.

Plus précisément, $GP_k$ est égal à la différence entre APR et $AP_k$.

Après avoir effectué cette détermination pour chacun des NA échantillons voisins de l'échantillon courant, on détermine, dans l'étape 31, le gradient ayant la plus faible valeur absolue parmi l'ensemble des gradients précédemment calculés $GP_k$.

Puis, on répète ces opérations pour toutes les grandeurs physiques affectées à l'échantillon courant et l'on détermine dans l'étape 32 le gradient ayant la plus faible valeur absolue parmi l'ensemble des gradients déterminés pour tous les échantillons voisins et toutes les grandeurs physiques.

L'échantillon voisin auquel est affecté ce gradient minimum est alors désigné comme étant un premier échantillon de référence A (étape 33).

Puis, on détermine un deuxième échantillon de référence B qui, dans le cas présent, est l'échantillon voisin restant formant avec l'échantillon A et l'échantillon courant PR un angle droit.

L'échantillon de référence PR et les deux échantillons de référence A et B forment ensemble le repère local RLC associé à l'échantillon courant PR.

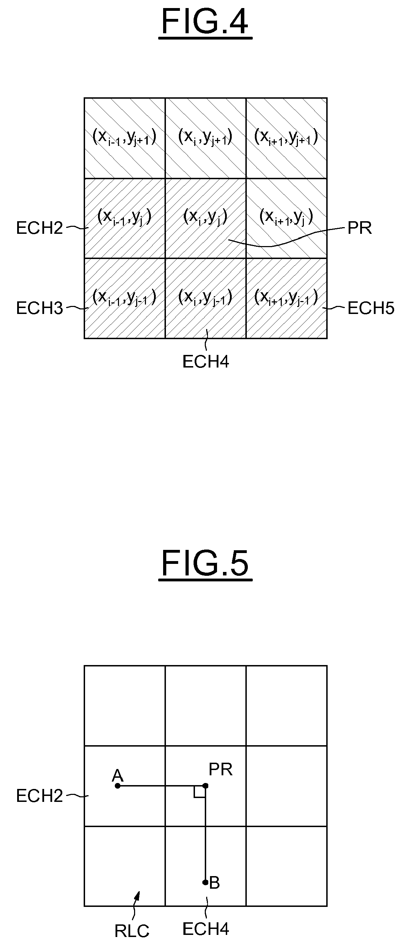

Des exemples possibles de repères locaux vont maintenant être illustrés en se référant plus particulièrement aux figures 4 à 8.

Sur la figure 4, on suppose que les pixels arrivent séquentiellement dans un format du type « raster ».

On suppose également sur la figure 4 que le pixel (échantillon) courant PR de coordonnées $x_i$ et $y_j$ est en cours de traitement et que les pixels précédents ECH2, ECH3, ECH4 et ECH5 ont déjà été traités par le procédé d'encodage.

Par contre, les autres pixels, c'est-à-dire le pixel de coordonnées $x_{i+1}, y_j$ appartenant à la ligne j ainsi que les pixels appartenant à la ligne j+1 n'ont pas encore été traités.

Par conséquent, les échantillons voisins du pixel PR, parmi lesquels vont être déterminés le premier échantillon de référence A et le deuxième échantillon de référence B sont les pixels ECH2, ECH3, ECH4 et ECH5.

Ce repère local déterminé RLC sera dans cet exemple, l'unique repère local associé à l'échantillon courant PR et valable pour l'encodage de toutes les grandeurs physiques, c'est-à-dire ici toutes les composantes couleurs, de l'échantillon courant.

Ainsi, sur la figure 5, le premier échantillon de référence A est l'échantillon ECH2 et le deuxième échantillon de référence B est l'échantillon ECH4.

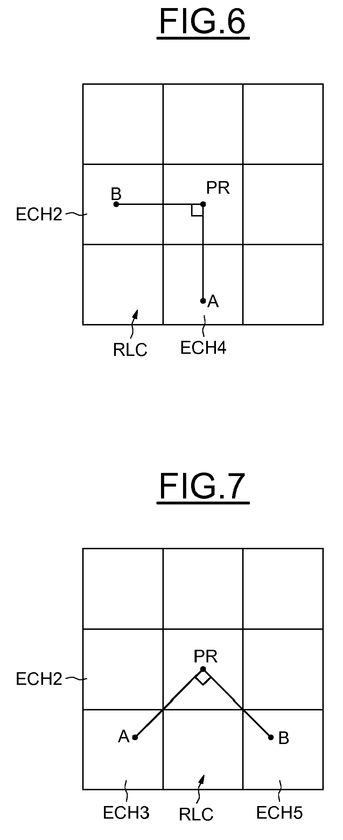

Une autre configuration possible est illustrée sur la figure 6, dans laquelle le premier échantillon de référence A est cette fois-ci l'échantillon ECH4 tandis que le deuxième échantillon de référence B est cette fois-ci l'échantillon ECH2.

Il est également possible, comme illustré sur la figure 7, d'avoir une autre structure pour le repère local RLC. Dans cette structure, le premier échantillon de référence A est l'échantillon ECH3 et le deuxième échantillon de référence B est l'échantillon ECH5.

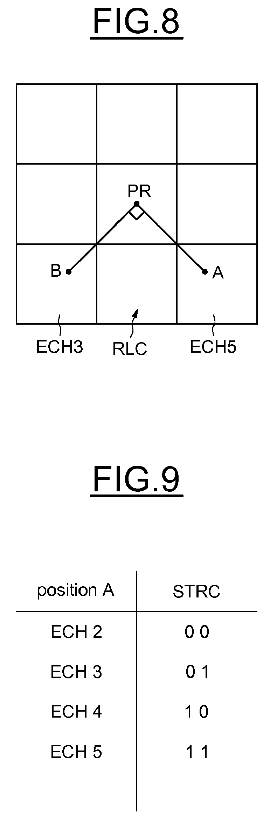

Dans la structure illustrée sur la figure 8, le premier échantillon de référence A est l'échantillon ECH5 et le deuxième échantillon de référence B est l'échantillon ECH3.

On voit donc qu'il est possible de définir un groupe de premiers bits permettant de paramétrer la structure du repère local.

Dans l'exemple décrit ici et comme illustré sur la figure 9, le groupe de premiers bits STRC comporte deux bits permettant de paramétrer les quatre positions possibles du premier échantillon de référence A et par conséquent les quatre structures possibles du repère local RLC.

Ainsi, dans l'exemple décrit ici, si le premier échantillon de référence A est l'échantillon ECH2, alors les deux bits STRC valent respectivement 00.

Si l'échantillon de référence A est l'échantillon ECH3 alors les deux bits STRC valent 01.

Si le premier échantillon de référence A est l'échantillon ECH4 alors les deux bits STRC valent 1 et 0 tandis que si le premier échantillon A est positionné au niveau de l'échantillon ECH5, alors les deux bits STRC valent 1 et 1.

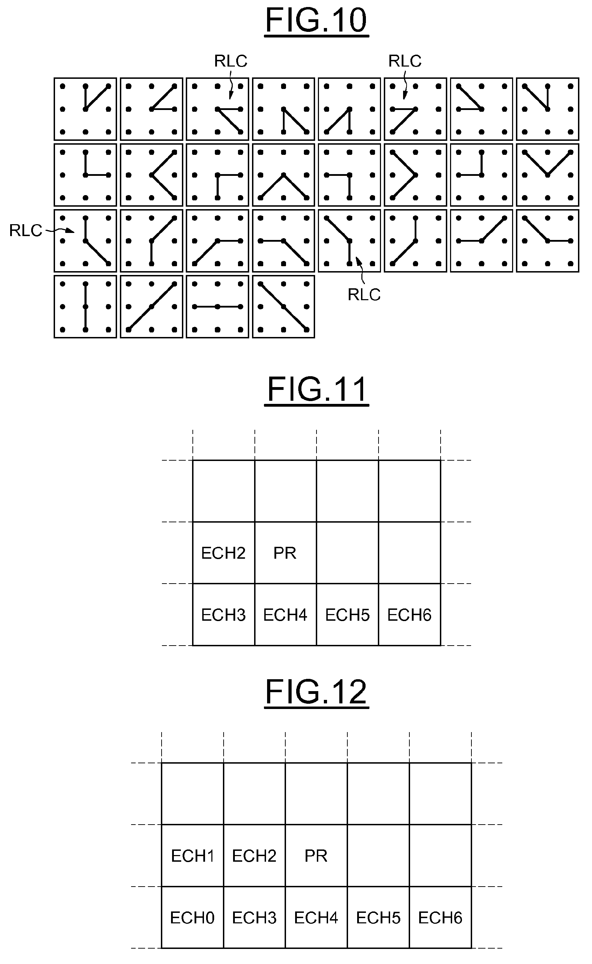

Comme illustré sur la figure 10, d'autres structures de repères locaux sont possibles, prévoyant non nécessairement un angle droit entre les deux lignes reliant respectivement l'échantillon courant aux deux échantillons de référence. Cela étant, alors que le premier échantillon de référence A reste toujours celui qui est associé au gradient ayant la plus faible valeur absolue, le deuxième échantillon de référence B est soit un échantillon formant avec l'échantillon courant et le premier échantillon de référence un angle droit, soit l'échantillon voisin de l'échantillon courant associé à la plus grande valeur absolue de tous les gradients calculés.

Par ailleurs, de tels repères locaux peuvent également être utilisés par exemple lorsqu'on traite l'image non pas dans un format « raster », mais par exemple macrobloc par macrobloc.

Dans les exemples qui viennent d'être décrits, les échantillons candidats utilisés pour la détermination des échantillons de référence A et B étaient des échantillons voisins de l'échantillon courant PR.

Cela étant, d'autres échantillons candidats disponibles sont possibles et peuvent être plus éloignés de l'échantillon courant PR.

C'est le cas dans les exemples illustrés sur les figures 11 et 12.

Sur la figure 11, outre les échantillons ECH2-ECH5, on peut prendre également en compte, pour la détermination des échantillons de référence A et B, l'échantillon ECH6.

Sur la figure 12, outre les échantillons ECH2-ECH5, on peut prendre également en compte, pour la détermination des échantillons de référence A et B, les échantillons ECH0, ECH1 et ECH6.

Bien entendu en fonction du nombre d'échantillons pris en compte et donc du nombre de structures possibles, le groupe de premiers bits STRC peut comprendre plus que 2 bits.

Le paramétrage du repère local ayant été effectué, les moyens de traitement MT1 sont configurés pour paramétrer, dans ce repère local, le niveau APR de la grandeur physique considérée.

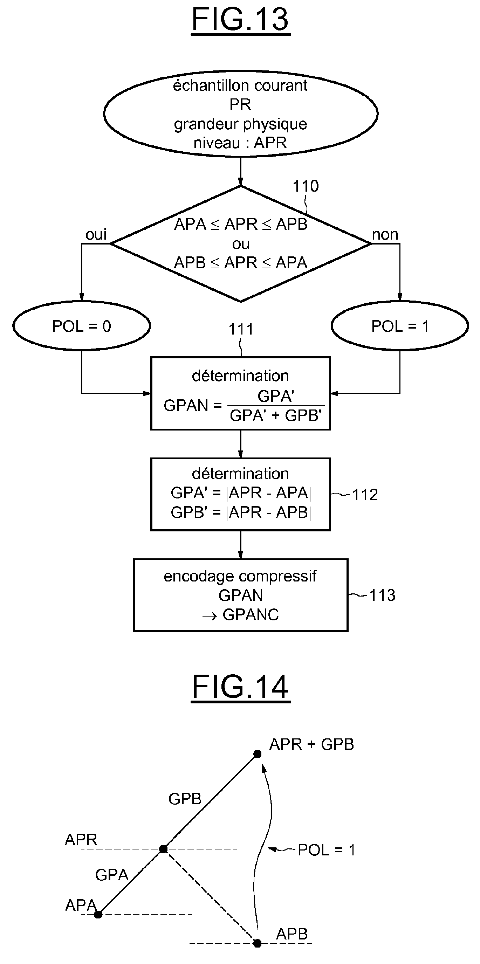

Une première variante possible est illustrée notamment sur la figure 13.

Dans l'étape 110, les moyens de traitement MT1 vérifient si le niveau de la grandeur physique APR se situe entre le niveau APA de la grandeur physique associée au premier échantillon de référence A et entre le niveau APB de la grandeur physique affectée au deuxième échantillon de référence B, ou bien entre APB et APA.

Si tel est le cas, on se situe dans un cas d'interpolation et les moyens de traitement affectent par exemple la valeur logique 0 à un bit de polarité POL.

Dans le cas contraire, on est dans un cas d'extrapolation c'est-à-dire que le niveau APR est soit supérieur ou égal au niveau APA qui est lui-même supérieur ou égal au niveau APB. Dans ce cas, les moyens de traitement confèrent la valeur 1 au bit de polarité POL.

Il convient de noter que dans le cas d'extrapolation, si le niveau APR est plus grand que les niveaux APA et APB, le niveau APB ne peut pas être supérieur au niveau APA car le premier échantillon de référence A est celui pour lequel il y a le gradient minimum.

De même, dans le cas où le niveau APR est inférieur aux deux niveaux APA et APB, le niveau APA ne peut pas être supérieur au niveau APB pour la même raison (gradient minimum pour le premier échantillon de référence A).

Une façon particulièrement simple de déterminer si l'on est dans un cas d'interpolation ou d'extrapolation consiste à déterminer du produit du signe du gradient GPA égal à APR-APA par le signe du gradient GPB égal à APR-APB.

Si le signe de ce produit est positif, alors le bit de polarité POL est mis à 1 (extrapolation) tandis que si le signe de produit est négatif, alors le bit de polarité POL est mis à zéro (interpolation).

Comme illustré sur la figure 14, dans le cas où l'on se situe dans une situation d'extrapolation, on se ramène à une situation d'interpolation en convertissant l'amplitude APB en une amplitude égale à APR + GPB, ce qui est une opération réversible au niveau de la décompression c'est-à-dire lors de la reconstruction du niveau APR, en prenant en compte le bit de polarité POL, comme cela sera expliqué plus en détail ci-après.

Dans l'étape 111, les moyens de traitement MT1 déterminent la valeur GPA' égale à la valeur absolue de GPA (GPA=APR-APA) ainsi que la valeur GPB' égale à la valeur absolue de GPB (GPB=APR-APB).

Puis, les moyens de traitement MT1 déterminent un paramètre qui est dans cet exemple de mise en oeuvre un gradient normalisé, à partir de GPA' et de GPB'.

Ce gradient normalisé GPAN est égal à GPA'/(GPA'+GPB').

Par ailleurs, puisque l'on a effectué une normalisation s'étendant entre les valeurs 0 et 1, le gradient normalisé GPAN est aussi égal à 1-(GPB'/(GPA'+GB')), à une erreur près.

Puis, les moyens de traitement effectuent dans l'étape 113 un encodage compressif du gradient normalisé GPAN de façon à obtenir un gradient normalisé compressé GPANC sur un groupe de deuxièmes bits. A titre indicatif, si le gradient normalisé GPAN est codé sur 10 bits, on peut prévoir de coder le gradient normalisé compressé GPANC sur cinq bits.

La compression s'effectue de façon classique et connue en soi à l'aide d'une courbe de compression.

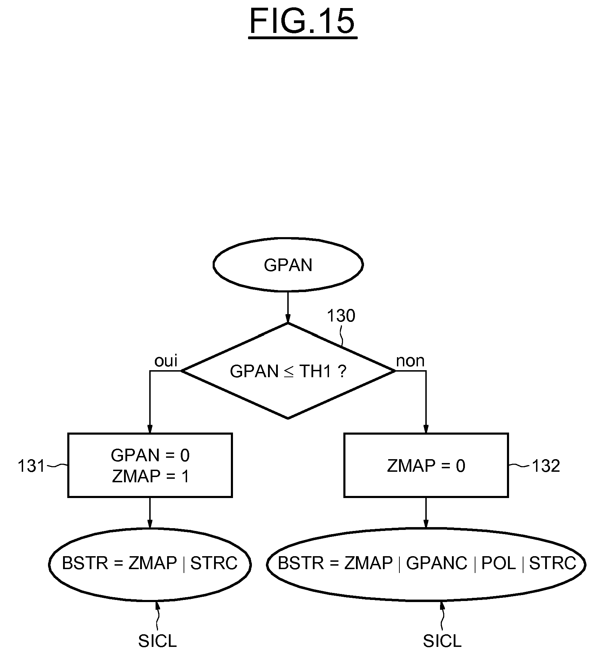

Si l'on se réfère maintenant plus particulièrement à la figure 15, on voit que les moyens de traitement MT1 comparent dans l'étape 130 le gradient normalisé GPAN à un seuil TH1.

Les moyens de traitement MT1 élaborent alors un troisième bit ZMAP dont la valeur est représentative du résultat de la comparaison.

Ainsi, si le gradient normalisé est inférieur ou égal au seul TH1, alors ZMAP est égal à 1 tandis que si le gradient normalisé GPAN est supérieur au seuil TH1, alors ZMAP = 0.

La valeur du seuil TH1 dépend de l'application et de la précision souhaitée pour la reconstruction de l'image.

A titre indicatif, on pourra choisir un seuil TH1 égal à 0,1.

Si le gradient normalisé GPAN est inférieur ou égal au seuil TH1, alors les moyens de traitement MT1 considèrent que ce gradient normalisé GPAN est nul (étape 131).

Dans ce cas, le signal local encodé STCL représentatif de la grandeur physique considérée affectée à l'échantillon comporte un bloc numérique BSTR qui ne comporte que le troisième bit ZMAP et les premiers bits STRC représentatifs de la structure du repère local.

Par contre, si dans l'étape 132 le troisième bit ZMAP a été mis égal à zéro, alors le signal local encodé SICL relatif au niveau de la grandeur physique considérée comporte comme bloc numérique BSTR, le troisième bit ZMAP, le groupe de deuxièmes bits représentatifs du gradient normalisé compressé GPANC, le bit de polarité POL et les premiers bits STRC représentatifs de la structure du repère local.

Bien entendu, l'ordre de ces différents bits dans le bloc numérique BSTR est totalement arbitraire et pourrait être différent.

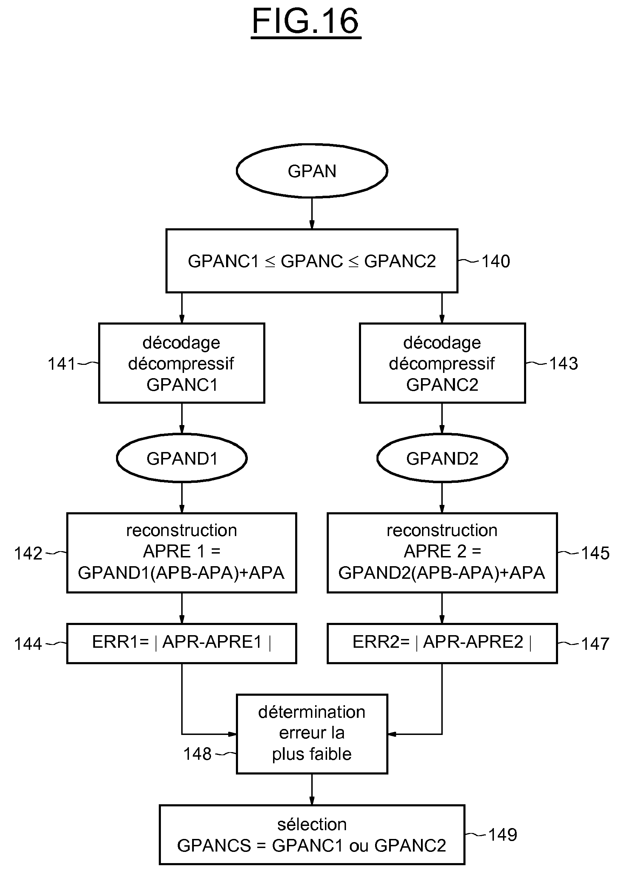

De façon à contrôler l'erreur de quantification, une stratégie de rebouclage peut être avantageusement mise en oeuvre comme illustré sur la figure 16.

Plus précisément, les moyens de traitement MT1 élaborent dans l'étape 140 à partir du gradient normalisé compressé GPANC un premier mot numérique complémentaire compressé GPANC1 et un deuxième mot numérique complémentaire compressé GPANC2 encadrant le gradient normalisé compressé GPANC.

D'une façon générale, le terme « encadrant » doit être pris dans un sens très large. Ainsi, les mots GPANC1 et GPANC2 peuvent être différents de GPANC. Cela étant, en pratique, l'un des deux mots GPANC1 ou GPANC2 peut être pris égal au mot GPANC. Et, dans le cas présent, on choisira par exemple le premier mot GPANC1 égal au gradient normalisé compressé GPANC tandis que le mot numérique complémentaire GPANC2 sera par exemple légèrement supérieur au gradient normalisé compressé GPANC, par exemple en augmentant de 1 le bit de poids faible (LSB) du gradient normalisé compressé GPAC.

Les moyens de traitement MT1 effectuent ensuite un décodage décompressif 141 du premier mot numérique complémentaire GPANC1, en utilisant la même courbe que celle utilisée pour la compression.

On obtient alors un premier mot numérique complémentaire décompressé GPAND1.

Puis, les moyens de traitement MT1 reconstruisent le niveau APRE1 de la grandeur physique considérée à partir du mot GPAND1 et des niveaux APB et APA.

Plus précisément, APRE 1 est égal à GPAND1(APB-APA)+APA.

Les moyens de traitement déterminent alors dans l'étape 144 une première erreur ERR1 égale à la valeur absolue de la différence entre APR et APRE1.

De la même façon, les moyens de traitement MT1 effectuent un décodage décompressif du deuxième mot numérique complémentaire GPANC2 de façon à obtenir un mot décompressé GPAND2 puis reconstruisent, à l'étape 145, le niveau APRE2 de la grandeur physique considérée à partir du mot GPAND2 et des niveaux APB et APA, d'une façon analogue à ce qui a été fait dans l'étape 142.

Les moyens de traitement déterminent alors une deuxième erreur ERR2 dans l'étape 147 égale à la valeur absolue de la différence entre APR et APRE2.

Les moyens de traitement MT1 déterminent alors dans l'étape 148 l'erreur la plus faible et sélectionnent par conséquent le mot numérique complémentaire compressé sélectionné GPANCS comme étant celui des deux mots GPANC1 ou GPANC2 associé à l'erreur la plus faible.

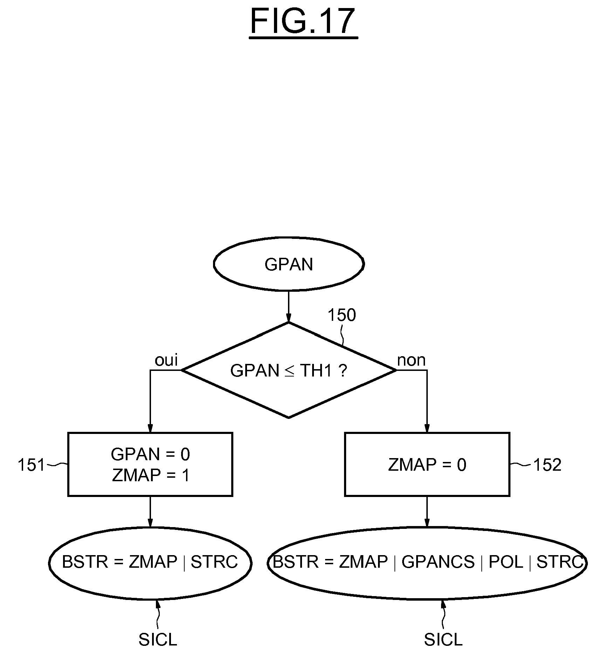

Et, comme illustré sur la figure 17, dans le cas où le troisième bit ZMAP est égal à zéro, le signal local encodé SICL comporte le bloc numérique BSTR incluant cette fois-ci le mot numérique comprimé sélectionné GPANCS à la place du gradient normalisé compressé GPANC.

Dans une autre variante, il est possible d'utiliser comme paramètre, non pas le gradient normalisé GPAN, mais directement GPA' c'est-à-dire la valeur absolue de la différence entre APR et APA, c'est-à-dire la valeur absolue du premier gradient GPA.

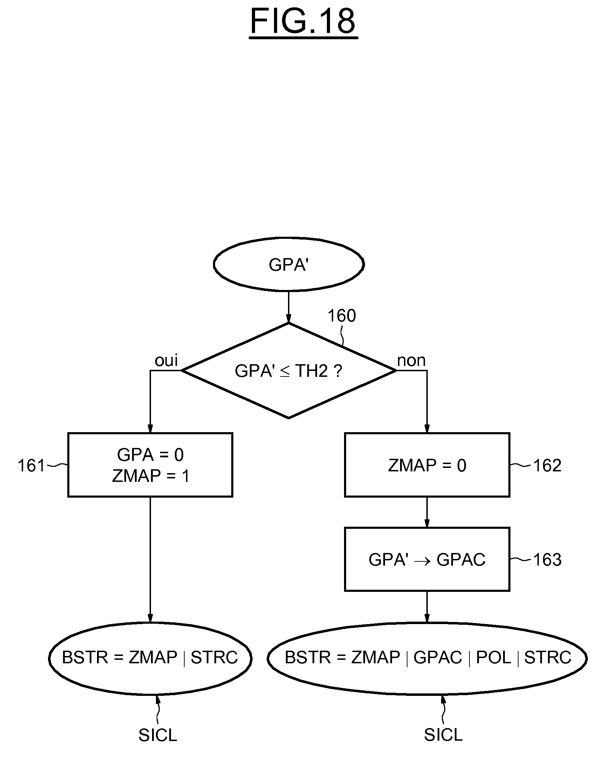

Ceci est illustré sur la figure 18.

Dans cette variante le bit de polarité POL est le signe de (APR-APA), c'est-à-dire qu'il indique si APR est inférieur à APA ou bien supérieur à APA.

Si APR est supérieur à APA alors POL = 0 tandis que si APR est inférieur à APA alors POL = 1

On compare cette fois-ci (étape 160) GPA' à un seuil TH2, qui peut être par exemple pris égal à 0,05, dans l'hypothèse où APR varie entre les valeurs 0 et 1.

Si GPA' est inférieur ou égal à TH2 alors GPA est considéré comme nul et ZMAP=1 (étape 161).

Le signal SICL contient alors le bloc numérique BSTR qui comporte uniquement les bits ZMAP et STRC.

Si GPA' est supérieur au seuil TH2, alors ZMAP=0 (étape 162) et l'on procède à un encodage compressif de GPA', d'une façon analogue à ce qui a été décrit pour GPAN, de façon à obtenir un premier gradient compressé GPAC (étape 163).

Le signal SICL contient alors le bloc numérique BSTR qui comporte qui comporte ZMAP, GAPC, POL, STRC.

Une stratégie de rebouclage peut également être mise en oeuvre par analogie à ce qui a été décrit sur la figure 16.

Ceci est décrit sur la figure 18.

Sur cette figure le paramètre compressé est GPAC à la place de GPANC.

Les étapes 170 à 179 sont analogues aux étapes 140 à 149 de la figure 14.

Aussi dans l'étape finale 179 on sélectionne le mot GPACS comme étant celui des deux mots GPAC1 et GPAC2 qui est associé à l'erreur la plus faible.

Dans les étapes 172 et 175, les formules de reconstruction du niveau APREi sont différentes de celles appliquées dans les étapes 142 et 145.

Plus précisément

$$si\ POL = 0\ alors\ APREi = APA + GPADi,$$

et

$$si\ POL = 1\ alors\ APREi = APA - GPADi.$$

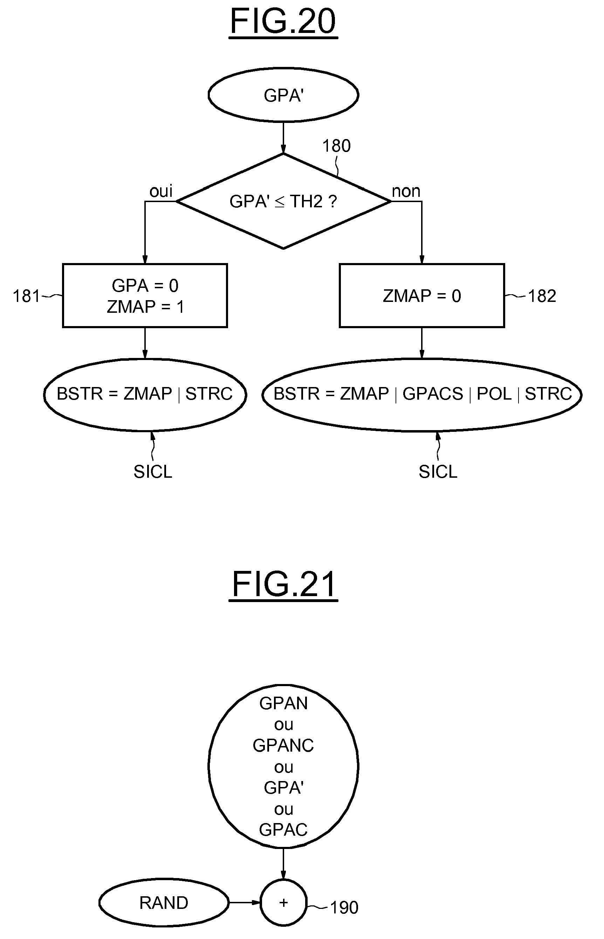

Puis comme illustré sur la figure 20, si GPA' est inférieur ou égal au seuil TH2 (étape 180) alors GPA' et donc GPA est considéré comme égal à 0 et ZMAP=1 (étape 181) et le bloc numérique BSTR contient uniquement ZMAP et STRC.

Si GPA' est supérieur au seuil TH2 alors ZMAP=0 (étape 182) et BSTR contient ZMAP, GPACS, POL et STRC.

De façon à disperser de façon aléatoire l'erreur de quantification, il est particulièrement avantageux, comme illustré sur la figure 21, de rajouter au gradient normalisé GPAN ou bien au gradient normalisé compressé GPAC ou bien à GPA' ou bien à GPAC, une grandeur pseudoaléatoire RAND (étape 190).

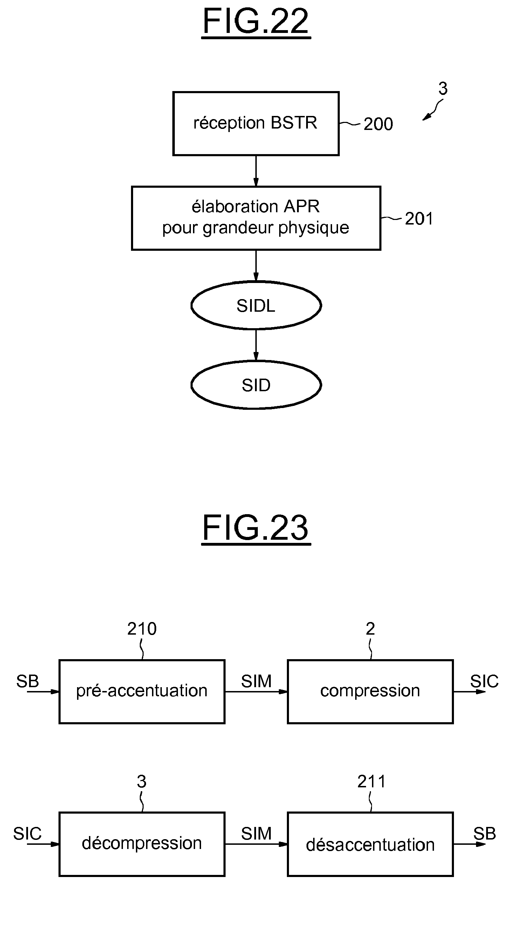

En réception, comme illustré sur la figure 22, les moyens de traitement MT2 vont élaborer, pour chaque échantillon courant et pour chaque grandeur physique affectée à cet échantillon courant, le niveau de la grandeur physique considérée à partir du bloc numérique BSTR reçu dans l'étape 200 de façon à délivrer un signal local décodé SIDL, c'est-à-dire à délivrer le niveau de la grandeur physique considérée.

L'ensemble des signaux locaux décodés SIDL forme un signal décodé SID.

Cette élaboration va tenir compte du contenu du bloc numérique BSTR reçu, et notamment des valeurs des bits ZMAP, et STRC, et éventuellement des bits POL et GPAC ou POL et GPANC.

On suppose ici que le paramètre éventuellement utilisé était le gradient normalisé GPAN.

Si le bit ZMAP est égal à 1, cela signifie que l'on était dans le cas où GPAN était nul et par conséquent, la valeur de la grandeur physique affectée à l'échantillon courant PR est alors simplement égale à la valeur APA de cette grandeur physique affectée à l'échantillon de référence A.

Cet échantillon A a déjà été traité précédemment.

Par conséquent, la valeur APA est connue.

En outre, les bits STRC permettent de déterminer la configuration du repère local et par conséquent les coordonnées de cet échantillon A dans la matrice de pixels.

Dans le cas où le bit ZMAP est égal à zéro, plusieurs cas sont à envisager.

Dans le cas où le bit de polarité POL est à 1, c'est-à-dire dans le cas où l'on se trouvait dans une configuration d'extrapolation, le niveau APR de la grandeur physique considérée est recalculé à partir de la formule suivante :

$$APR=APA+(APB-APA)GPAN/(2GPAN-1) \qquad (1)$$

Dans cette formule, GPAN a été obtenu par un décodage décompressif de GPANC (ou de GPANCS).

Il convient de noter que la formule (1) est valable pour les deux cas possibles d'extrapolation c'est-à-dire dans le cas où APB est inférieur ou égal à APA lui-même inférieur ou égal à APR, et dans le cas ou APB est supérieur ou égal à APA lui-même supérieur ou égal à APR.

Dans le cas où le bit de polarité POL est nul, c'est-à-dire que l'on est dans un cas d'interpolation, le niveau APR de la grandeur physique considérée est recalculé à partir de la formule (2) ou de la formule (3) ci-dessous :

$$APR=APA-APA.GPAN+APB.GPAN \qquad (2)$$

$$APR=APB+APA.GPAN-APB.GPAN \qquad (3)$$

selon que APA est plus petit ou plus grand que APB, respectivement.

Plus précisément, si APA est inférieur ou égal à APR lui-même inférieur ou égal à APB, alors la formule (2) s'applique.

Si APB est inférieur ou égal à APR lui-même inférieur ou égal à APA, alors la formule (3) s'applique.

Et, la condition APA plus petit ou plus grand que APB est déterminée par les moyens de traitement MT2 eux-mêmes puisque ces niveaux sont déjà connus car affectés à des échantillons déjà traités.

Dans le cas où le paramètre utilisé lors de l'encodage est la valeur absolue GPA' du premier gradient GPA (GPA'=|GPA|=|APR-APA|), et que le bit POL est représentatif du signe de APR-APA ((POL)=sign(APR-APA)), alors dans le cas où ZMAP=0, le niveau APR de la grandeur physique affectée à l'échantillon courant PR est reconstruit par les formules suivantes :

$$APR=APA+GPAC \text{ si } POL=0$$

$$APR=APA-GPAC \text{ si } POL=1$$

GPAC étant le paramètre compressé reçu dans le bloc numérique BSTR. Bien entendu dans le cas d'un rebouclage d'erreur GPAC est remplacé par GPACS.

Bien entendu si ZMAP=1, alors comme dans la variante précédente, APR=APA.

L'invention n'est pas limitée aux modes de mise en oeuvre et de réalisation qui viennent d'être décrits mais en embrasse toutes les variantes.

Ainsi, comme illustré sur la figure 23, il est particulièrement avantageux de faire précéder l'encodage 2 par un pré-traitement de pré-accentuation (« pre-emphasis ») effectué par exemple de façon classique par une correction y (x⁻ᵞ) ou à l'aide d'une courbe de quantification perceptuelle ou alors avec une courbe du type S ou à l'aide d'une table (« look up table »).

Dans ce cas, le décodage 3 est suivi d'un post-traitement 211 de désaccentuation (« de-emphasis ») utilisant une fonction inverse de la fonction utilisée dans le traitement 180.

Dans certains cas, la séquence d'échantillons, par exemple la séquence de pixels, peut être décomposée en sous-séquences.

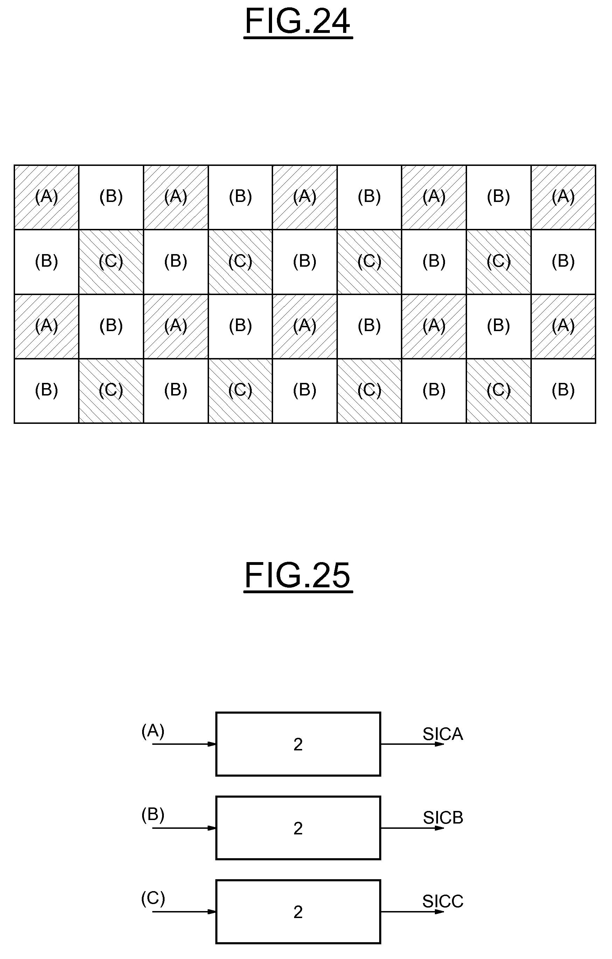

C'est le cas par exemple, comme illustré sur la figure 24, où les pixels sont encodés au format YCB 420.

Plus précisément, la sous-séquence (A) (des pixels) comporte les pixels affectés des composantes $YC_bC_r$.

La sous-séquence (B) comporte les pixels affectés des composantes Y et la sous-séquence (C) comprend les pixels encadrés par les pixels de la sous-séquence (B) et affectés eux aussi de la composante Y.

Dans ce cas, les moyens de traitement MT1 peuvent appliquer successivement ou en parallèle (figure 25) le traitement d'encodage 2 qui vient d'être décrit sur les sous-séquences (A), (B) et (C) respectivement, de façon à délivrer des signaux encodés SICA, SICB et SICC. Bien entendu, dans ce cas, pour la sous-séquence (A) par exemple, les pixels voisins d'un pixel courant (A) seront choisis parmi les pixels (A) adjacents à ce pixel courant (A).

Il en est de même par analogie pour les pixels (B) et (C).

Par ailleurs, dans certains cas, certains échantillons peuvent ne pas être soumis au traitement d'encodage qui vient d'être décrit.

Plus précisément, pour certaines positions d'échantillon prédéfinies, qui sont connues par le dispositif d'encodage et le dispositif de décodage, il serait possible de transmettre directement pour chaque grandeur physique considérée, son niveau APR sans qu'il soit nécessaire de transmettre le troisième bit ZMAP. C'est le cas par exemple pour chaque pixel de la première ligne et de la première colonne d'une trame ou d'un macrobloc ou encore pour les premiers pixels d'une trame ou d'un macrobloc examinés de façon hélicoïdale.

Par ailleurs, dans certaines applications nécessitant notamment une précision plus élevée, il est possible, après avoir déterminé le troisième bit ZMAP pour un échantillon courant, de ne pas calculer le gradient normalisé compressé GPANC ou la valeur absolue GPA' du premier gradient GPA et de transmettre directement le niveau APR de la grandeur physique considérée.

Dans ce cas, si le bit ZMAP est égal à zéro, alors le bloc numérique BSTR comprend le bit ZMAP suivi du niveau APR tandis que si le bit ZMAP est égal à 1, le bloc numérique BSTR comprend ce bit ZMAP suivi des premiers bits STRC.

## Revendications

1. Procédé d'encodage d'un signal numérique initial (SIM) en un signal encodé (SIC), le signal numérique initial (SIM) comportant une séquence d'échantillons représentant un espace multidimensionnel, chaque échantillon étant affecté d'au moins une grandeur physique, le procédé comprenant pour certains au moins des échantillons courants des encodages localisés (20) du signal en des signaux numériques locaux encodés (SICL), ces encodages étant effectués dans des repères locaux (RLC) incluant chacun l'échantillon courant considéré et deux échantillons de référence choisis, sur la base d'un gradient minimal de ladite au moins une grandeur physique, parmi les échantillons disponibles de ladite séquence, le signal encodé (SIC) comportant lesdits signaux numériques locaux encodés (SICL).

2. Procédé selon la revendication 1, dans lequel chaque encodage localisé (2) comporte pour chaque grandeur physique affectée à l'échantillon courant considéré, un paramétrage numérique dudit repère local (RLC) et du niveau (APR) de la grandeur physique considérée dans ledit repère local de façon à obtenir le signal encodé local associé à l'échantillon courant (PR) et à la grandeur physique considérée.

3. Procédé selon la revendication 1 ou 2, dans lequel chaque encodage localisé comporte pour chaque grandeur physique affectée à l'échantillon courant considéré, une détermination du repère local formé par ledit échantillon courant (PR) et les deux échantillons de référence (A, B) sélectionnés au moins à partir d'une détermination du gradient ayant la plus faible valeur absolue parmi les gradients $(GP_k)$ de la grandeur physique considérée entre ledit échantillon courant et au moins deux échantillons disponibles de ladite séquence, par exemple deux échantillons voisins de cet échantillon courant.

4. Procédé selon la revendication 3, dans lequel un premier échantillon de référence (A) dudit repère local est sélectionné au moins à partir de ladite détermination du gradient ayant la plus faible valeur absolue parmi les gradients de la grandeur physique considérée, et le deuxième échantillon de référence (B) est
un échantillon disponible restant formant avec ledit premier échantillon de référence et l'échantillon courant un angle droit, ou
un échantillon disponible restant sélectionné au moins à partir de ladite détermination du gradient ayant la plus grande valeur absolue parmi les gradients de la grandeur physique considérée.

5. Procédé selon l'une des revendications précédentes, dans lequel chaque échantillon est affecté de plusieurs grandeurs physiques $(Y, C_b, C_r)$ et pour chaque échantillon courant la détermination du repère local (RLC) comprend une détermination d'un repère local unique valable pour toutes les grandeurs physiques affectées à cet échantillon courant.

**6.** Procédé selon les revendications 4 et 5, dans lequel la détermination dudit repère local comprend pour chaque échantillon courant appartenant à un groupe d'au moins trois échantillons incluant ledit échantillon courant et au moins deux échantillons disponibles de ladite séquence, par exemple deux échantillons voisins de cet échantillon courant,

une première étape de détermination comportant pour chaque grandeur physique, une détermination (30) des gradients de cette grandeur physique entre ledit échantillon courant et chaque échantillon disponible,

une étape de sélection du premier échantillon de référence comportant une sélection (31, 32) parmi lesdits échantillons disponibles, de l'échantillon disponible dont le gradient associé a la plus faible valeur absolue parmi tous les gradients calculés pour toutes les grandeurs physiques,

une deuxième étape de détermination (34) du deuxième échantillon de référence comportant une détermination parmi les échantillons disponibles restants, de l'échantillon disponible formant avec ledit premier échantillon de référence et l'échantillon courant un angle droit ou correspondant à l'échantillon disponible dont le gradient associé a la plus grande valeur absolue parmi tous les gradients calculés pour toutes les grandeurs physiques.

**7.** Procédé selon la revendication 6, dans lequel pour chaque échantillon courant ledit groupe inclut ledit échantillon courant (PR) et quatre échantillons voisins (ECH2, ECH3, ECH4, ECH5) ayant déjà donné lieu à l'établissement des signaux numériques locaux encodés associés à ces échantillons voisins, et le deuxième échantillon de référence est celui qui forme un angle droit avec le premier échantillon de référence et l'échantillon courant.

**8.** Procédé selon l'une des revendications 2 à 7, dans lequel le paramétrage du repère local comprend une élaboration d'un groupe de premiers bits (STRC) dont les valeurs définissent la structure du repère local parmi un ensemble de structures possibles.

**9.** Procédé selon l'une des revendications 2 à 8, dans lequel le paramétrage du niveau de la grandeur physique considérée dans le repère local comprend une détermination d'un bit de polarité (POL) dont la valeur indique au moins le positionnement du niveau de la grandeur physique considérée affectée à l'échantillon courant par rapport au niveau (APA) de ladite grandeur physique affectée au premier échantillon de référence.

**10.** Procédé selon l'une des revendications 2 à 9, dans lequel le paramétrage du niveau de la grandeur physique considérée dans le repère local comprend une élaboration d'un paramètre (GPA, GPAN) faisant intervenir au moins la valeur absolue du gradient (GPA), dit premier gradient, de ladite grandeur physique entre l'échantillon courant et le premier échantillon de référence, une comparaison de ce paramètre à un seuil (TH1, TH2), et une élaboration d'un troisième bit (ZMAP) représentatif du résultat de ladite comparaison.

**11.** Procédé selon la revendication 10, dans lequel si le paramètre (GPA', GPAN) est inférieur ou égal audit seuil, il est considéré comme nul.

**12.** Procédé selon la revendication 10 ou 11, dans lequel le paramétrage du niveau de la grandeur physique considérée dans le repère local comprend en outre en encodage compressif sur un groupe de deuxièmes bits dudit paramètre de façon à obtenir un paramètre compressé (GPANC, GPAC).

**13.** Procédé selon l'une des revendications 10 à 12, dans lequel le bit de polarité (POL) indique si le niveau (APR) de la grandeur physique considérée affectée à l'échantillon courant se situe ou non entre le niveau (APA) de ladite grandeur physique affectée au premier échantillon de référence et le niveau (APB) de ladite grandeur physique affectée au deuxième échantillon de référence, et le paramétrage du niveau de la grandeur physique considérée dans le repère local comprend en outre

une détermination de la valeur absolue (GPB') du gradient (GPB), dit deuxième gradient, de ladite grandeur physique entre l'échantillon courant et le deuxième échantillon de référence,

une détermination d'un gradient normalisé (GPAN) à partir des valeurs absolues du premier gradient et du deuxième gradient, ledit gradient normalisé (GPAN) formant ledit paramètre.

**14.** Procédé selon l'une des revendications 10 à 12, dans lequel le bit de polarité (POL) indique si le niveau (APR) de la grandeur physique considérée affectée à l'échantillon courant est inférieur ou supérieur au niveau (APA) de ladite grandeur physique affectée au premier échantillon de référence, et la valeur absolue (GPA') du premier gradient (GPA) forme ledit paramètre.

**15.** Procédé selon l'une des revendications 10 à 14, dans lequel le signal numérique local encodé (SICL) associé à la grandeur physique considérée affectée à l'échantillon courant comprend au moins le troisième bit (ZMAP).

**16.** Procédé selon la revendication 15, dans lequel le signal numérique local encodé (SICL) associé à la grandeur physique considérée affectée à l'échantillon courant comprend le groupe de premiers bits (STRC) et éventuellement, le paramètre compressé (GPANC, GPAC) ainsi que le bit de polarité (POL).

**17.** Procédé selon la revendication 16, dans lequel si ledit paramètre est inférieur ou égal audit seuil, le signal numérique local encodé contient alors uniquement le groupe de premiers bits (STRC) et le troisième bit (ZMAP), et si le paramètre est supérieur audit seuil, le signal numérique local encodé contient alors le groupe de premiers bits (STRC), le paramètre compressé (GPANC, GPAC), le bit de polarité (POL) et le troisième bit (ZMAP).

**18.** Procédé selon la revendication 16 prise en combinaison avec l'une des revendications 12 à 14, dans lequel le paramétrage du niveau de la grandeur physique considérée dans le repère local comprend en outre
une élaboration (140, 170) à partir du paramètre compressé d'un premier mot numérique complémentaire compressé et d'un deuxième mot numérique complémentaire compressé encadrant le paramètre compressé,
un décodage décompressif (141, 171) du premier mot numérique complémentaire compressé, une reconstruction (142, 172) du niveau de ladite grandeur physique à partir du premier mot numérique complémentaire décodé de façon à obtenir un premier niveau reconstruit pour ladite grandeur physique,
une élaboration (144) d'une première erreur (ERR1) entre le niveau de grandeur physique considérée et ledit premier niveau reconstruit,
un décodage décompressif (143, 173) du deuxième mot numérique compressé,
une reconstruction (145, 175) du niveau de ladite grandeur physique à partir du deuxième mot numérique complémentaire décodé de façon à obtenir un deuxième niveau reconstruit pour ladite grandeur physique,
une élaboration (147) d'une deuxième erreur (ERR2) entre le niveau de grandeur physique considérée et ledit deuxième niveau reconstruit,
une sélection (149, 179) de celui du premier ou du deuxième mot numérique complémentaire compressé qui donne l'erreur la plus faible parmi la première erreur et la deuxième erreur, et
si le paramètre est inférieur ou égal audit seuil (TH1, TH2), il est alors considéré comme nul, et le signal numérique local encodé contient alors uniquement le groupe de premiers bits (STRC) et le troisième bit (ZMAP), tandis que si le paramètre est supérieur audit seuil, le signal numérique local encodé contient alors le groupe de premiers bits (STRC), le mot numérique complémentaire compressé sélectionné (GPANCS, GPACS), le bit de polarité (POL) et le troisième bit (ZMAP).

**19.** Procédé selon l'une des revendications 10 à 18, dans lequel le paramétrage du niveau de la grandeur physique considérée dans le repère local comprend en outre une adjonction (190) d'une quantité pseudo aléatoire (RAND) sur ledit paramètre ou sur ledit paramètre compressé.

**20.** Procédé selon l'une des revendications précédentes, dans lequel ladite séquence d'échantillons est subdivisée en plusieurs sous-séquences (A), (B), (C), les échantillons courants sur lesquels sont effectués lesdits encodages localisés appartiennent à au moins une sous-séquence de ladite séquence.

**21.** Procédé selon l'une des revendications précédentes, dans lequel le signal numérique initial est un signal vidéo (SIM), chaque échantillon étant un pixel et chaque grandeur physique est une composante couleur ($Y$, $C_b$, $C_r$) du pixel.

**22.** Procédé selon l'une des revendications précédentes, dans lequel le signal initial résulte d'un prétraitement (210) effectué sur un signal de base, ce prétraitement comportant un traitement de pré-accentuation.

**23.** Procédé de décodage d'un signal numérique en un signal décodé, le signal numérique ayant été encodé par le procédé selon l'une des revendications précédentes, comprenant pour chaque échantillon courant et pour chaque grandeur physique, une élaboration (201) du niveau de la grandeur physique considérée à partir du signal numérique local encodé associé à cet échantillon courant, de façon à délivrer un signal local décodé (SIDL), le signal décodé comportant lesdits signaux locaux décodés (SID).

**24.** Procédé selon la revendication 23, comprenant en outre, le signal numérique initial ayant été encodé par le procédé selon la revendication 22, un post traitement effectué sur le signal décodé, ce post-traitement (211) comportant un traitement de désaccentuation.

**25.** Dispositif d'encodage d'un signal numérique initial en un signal encodé, le signal numérique initial comportant une séquence d'échantillons représentant un espace multidimensionnel, chaque échantillon étant affecté d'au moins une grandeur physique, comprenant des moyens de traitement (MT1) configurés pour effectuer, pour certains au moins des échantillons courants, des encodages localisés du signal en un signal numérique local encodé dans des repères locaux incluant chacun l'échantillon courant considéré et deux échantillons de référence choisis, sur la base d'un gradient minimal de ladite au moins une grandeur physique, parmi les échantillons disponibles de ladite séquence, le signal encodé comportant lesdits signaux numériques locaux encodés.

26. Dispositif selon la revendication 25, dans lequel les moyens de traitement (MT1) sont configurés pour effectuer, pour chaque grandeur physique affectée à l'échantillon courant considéré, un paramétrage numérique dudit repère local et du niveau de la grandeur physique considérée dans ledit repère local de façon à obtenir le signal numérique local encodé associé audit échantillon courant considéré et à la grandeur physique considéré.

27. Dispositif selon la revendication 25 ou 26, dans lequel les moyens de traitement (MT1) sont configurés pour effectuer, pour chaque grandeur physique affectée à l'échantillon courant considéré, une détermination du repère local formé par ledit échantillon courant et les deux échantillons de référence sélectionnés au moins à partir d'une détermination du gradient ayant la plus faible valeur absolue parmi les gradients de la grandeur physique considérée entre ledit échantillon courant et au moins deux échantillons disponibles de ladite séquence, par exemple deux échantillons voisins de cet échantillon courant.

28. Dispositif selon la revendication 27, dans lequel les moyens de traitement (MT1) sont configurés pour sélectionner un premier échantillon de référence dudit repère local au moins à partir de ladite détermination du gradient ayant la plus faible valeur absolue parmi les gradients de la grandeur physique considérée, et le deuxième échantillon de référence est
un échantillon disponible restant formant avec ledit premier échantillon de référence et l'échantillon courant un angle droit, ou
un échantillon disponible restant sélectionné au moins à partir de ladite détermination du gradient ayant la plus grande valeur absolue parmi les gradients de la grandeur physique considérée.

29. Dispositif selon l'une des revendications 25 à 28, dans lequel chaque échantillon est affecté de plusieurs grandeurs physiques et pour chaque échantillon courant, les moyens de traitement sont configurés pour déterminer un repère local unique valable pour toutes les grandeurs physiques affectées à cet échantillon courant.

30. Procédé selon les revendications 28 et 29, dans lequel les moyens de traitement (MT1) sont configurés pour effectuer, pour chaque échantillon courant appartenant à un groupe d'au moins trois échantillons incluant ledit échantillon courant et au moins deux échantillons disponibles, la détermination locale dudit repère local comprenant une première étape de détermination comportant pour chaque grandeur physique, une détermination des gradients de cette grandeur physique entre ledit échantillon courant et chaque échantillon disponible,
une étape de sélection du premier échantillon de référence comportant une sélection parmi lesdits échantillons disponible, de l'échantillon disponible dont le gradient associé a la plus faible valeur absolue parmi tous les gradients calculés pour toutes les grandeurs physiques,
une deuxième étape de détermination du deuxième échantillon de référence comportant une détermination parmi les échantillons disponibles restants, de l'échantillon disponible formant avec ledit premier échantillon de référence et l'échantillon courant un angle droit ou correspondant à l'échantillon disponible dont le gradient associé a la plus grande valeur absolue parmi tous les gradients calculés pour toutes les grandeurs physiques.

31. Dispositif selon la revendication 30, dans lequel pour chaque échantillon courant ledit groupe inclut ledit échantillon courant et quatre échantillons voisins ayant déjà donné lieu à l'établissement des blocs numériques associés à ces échantillons voisins, et le deuxième échantillon de référence (B) est celui qui forme un angle droit avec le premier échantillon de référence (A) et l'échantillon courant (PR).

32. Dispositif selon l'une des revendications 26 à 31, dans lequel les moyens de traitement (MT1) sont configurés pour effectuer, pour le paramétrage du repère local, une élaboration d'un groupe de premiers bits dont les valeurs définissent la structure du repère local parmi un ensemble de structures possibles.

33. Dispositif selon l'une des revendications 26 à 32, dans lequel les moyens de traitement (MT1) sont configurés pour effectuer, pour le paramétrage du niveau de la grandeur physique considérée dans le repère local, une détermination d'un bit de polarité (POL) dont la valeur indique au moins le positionnement du niveau de la grandeur physique considérée affectée à l'échantillon courant par rapport au niveau (APA) de ladite grandeur physique affectée au premier échantillon de référence.

**34.** Dispositif selon l'une des revendications 26 à 33, dans lequel les moyens de traitement (MT1) sont configurés pour effectuer, pour le paramétrage du niveau de la grandeur physique considérée dans le repère local, une élaboration d'un paramètre faisant intervenir au moins la valeur absolue du gradient, dit premier gradient, de ladite grandeur physique entre l'échantillon courant et le premier échantillon de référence, une comparaison de ce paramètre à un seuil, et une élaboration d'un troisième bit représentatif du résultat de ladite comparaison.

**35.** Dispositif selon la revendication 34, dans lequel si le paramètre est inférieur ou égal audit seuil, il est considéré comme nul.

**36.** Dispositif selon la revendication 34 ou 35, dans lequel les moyens de traitement (MT1) sont configurés pour effectuer, pour le paramétrage du niveau de la grandeur physique considérée dans le repère local, un encodage compressif sur un groupe de deuxièmes bits dudit paramètre de façon à obtenir un paramètre compressé.

**37.** Dispositif selon l'une des revendications 34 à 36, dans lequel le bit de polarité (POL) indique si le niveau (APR) de la grandeur physique considérée affectée à l'échantillon courant se situe ou non entre le niveau (APA) de ladite grandeur physique affectée au premier échantillon de référence et le niveau (APB) de ladite grandeur physique affectée au deuxième échantillon de référence, et les moyens de traitement (MT1) sont configurés pour effectuer en outre, pour le paramétrage du niveau de la grandeur physique considérée dans le repère local,
une détermination de la valeur absolue du gradient, dit deuxième gradient, de ladite grandeur physique entre l'échantillon courant et le deuxième échantillon de référence,
une détermination d'un gradient normalisé à partir des valeurs absolues du premier gradient et du deuxième gradient, ledit gradient normalisé formant ledit paramètre.

**38.** Dispositif selon l'une des revendications 34 à 36, dans lequel le bit de polarité (POL) indique si le niveau (APR) de la grandeur physique considérée affectée à l'échantillon courant est inférieur ou supérieur au niveau (APA) de ladite grandeur physique affectée au premier échantillon de référence, et la valeur absolue du premier gradient forme ledit paramètre.

**39.** Dispositif selon l'une des revendications 34 à 38, dans lequel le signal numérique local encodé (SICL) associé à la grandeur physique considérée affectée à l'échantillon courant comprend au moins le troisième bit.

**40.** Dispositif selon la revendication 39, dans lequel le signal numérique local encodé (SICL) associé à la grandeur physique considérée affectée à l'échantillon courant comprend le groupe de premiers bits et éventuellement, le paramètre compressé ainsi que le bit de polarité.

**41.** Dispositif selon la revendication 40, dans lequel si ledit paramètre est inférieur ou égal audit seuil, le signal numérique local encodé contient alors uniquement le groupe de premiers bits et le troisième bit, et si le paramètre est supérieur audit seuil, le signal numérique local encodé contient alors le groupe de premiers bits, le paramètre compressé, le bit de polarité et le troisième bit.

**42.** Dispositif selon la revendication 40 prise en combinaison avec l'une des revendications 36 à 38, dans lequel les moyens de traitement (MT1) sont configurés pour effectuer en outre, pour le paramétrage du niveau de la grandeur physique considérée dans le repère local,
une élaboration à partir du paramètre compressé d'un premier mot numérique complémentaire compressé et d'un deuxième mot numérique complémentaire compressé encadrant le paramètre compressé,
un décodage décompressif du premier mot numérique complémentaire compressé, une reconstruction du niveau de ladite grandeur physique à partir du premier mot numérique complémentaire décodé de façon à obtenir un premier niveau reconstruit pour ladite grandeur physique,
une élaboration d'une première erreur entre le niveau de grandeur physique considérée et ledit premier niveau reconstruit,
un décodage décompressif du deuxième mot numérique compressé,
une reconstruction du niveau de ladite grandeur physique à partir du deuxième mot numérique complémentaire décodé de façon à obtenir un deuxième niveau reconstruit pour ladite grandeur physique,
une élaboration d'une deuxième erreur entre le niveau de grandeur physique considérée et ledit deuxième niveau reconstruit,
une sélection de celui du premier ou du deuxième mot numérique complémentaire compressé qui donne l'erreur la plus faible parmi la première erreur et la deuxième erreur, et
si le paramètre est inférieur ou égal audit seuil, il est alors considéré comme nul, et le signal numérique local encodé contient alors uniquement le groupe de premiers bits et le troisième bit, tandis que si le paramètre est supérieur audit seuil, le signal numérique local encodé contient alors le groupe de premiers bits, le mot numérique complémentaire compressé sélectionné, le bit de polarité et le troisième bit.

43. Dispositif selon l'une des revendications 34 à 42, dans lequel les moyens de traitement sont configurés pour effectuer en outre, pour le paramétrage du niveau de la grandeur physique considérée dans le repère local, une adjonction d'une quantité pseudo aléatoire sur ledit paramètre ou sur ledit paramètre compressé.

44. Dispositif selon l'une des revendications 25 à 43, dans lequel ladite séquence d'échantillons est subdivisée en plusieurs sous-séquences, et les moyens de traitement sont configurés pour effectuer les compressions locales sur des échantillons courants appartenant à au moins une sous-séquence de ladite séquence.

45. Dispositif selon l'une des revendications 25 à 44, dans lequel le signal numérique initial est un signal vidéo, chaque échantillon étant un pixel et chaque grandeur physique est une composante couleur du pixel.

46. Dispositif de décodage d'un signal numérique encodé par le dispositif d'encodage selon l'une des revendications 25 à 45, configuré pour délivrer un signal décodé, comprenant des moyens de traitement (MT1) configurés pour, pour chaque échantillon courant, effectuer une élaboration du niveau de la grandeur physique considérée à partir du signal numérique local encodé associé à cet échantillon courant, de façon à délivrer un signal local décodé, le signal décodé comportant lesdits signaux locaux décodés.

47. Produit programme d'ordinateur chargeable directement dans une mémoire d'un système informatique, comprenant des portions de code de logiciel pour l'exécution du procédé d'encodage selon l'une des revendications 1 à 22 ou du procédé de décodage selon la revendication 23 ou 24, lorsque ledit programme est exécuté sur ledit système informatique.

48. Support lisible par un système informatique, ayant des instructions exécutables par ordinateur adaptées pour provoquer l'exécution par le système informatique du procédé d'encodage selon l'une des revendications 1 à 22 ou du procédé de décodage selon la revendication 23 ou 24.

FIG.1

## FIG.2

## FIG.3

EP 3 203 737 A1

## FIG.4

$(x_{i-1}, y_{j+1})$  $(x_i, y_{j+1})$  $(x_{i+1}, y_{j+1})$

ECH2 — $(x_{i-1}, y_j)$  $(x_i, y_j)$  $(x_{i+1}, y_j)$ — PR

ECH3 — $(x_{i-1}, y_{j-1})$  $(x_i, y_{j-1})$  $(x_{i+1}, y_{j-1})$ — ECH5

ECH4

## FIG.5

A   PR

ECH2 —

B

RLC   ECH4

21

## FIG.6

## FIG.7

# FIG.8

PR

B

A

ECH3    RLC    ECH5

# FIG.9

| position A | STRC |
|---|---|
| ECH 2 | 0 0 |
| ECH 3 | 0 1 |
| ECH 4 | 1 0 |
| ECH 5 | 1 1 |

## FIG.10

RLC          RLC

RLC

RLC

## FIG.11

| | | | |
|---|---|---|---|
| ECH2 | PR | | |
| ECH3 | ECH4 | ECH5 | ECH6 |

## FIG.12

| | | | | |
|---|---|---|---|---|
| ECH1 | ECH2 | PR | | |
| ECH0 | ECH3 | ECH4 | ECH5 | ECH6 |

## FIG.13

```
         échantillon courant
                PR
         grandeur physique
           niveau : APR
```

110

```
        APA ≤ APR ≤ APB
oui            ou            non
        APB ≤ APR ≤ APA
```

POL = 0          111          POL = 1

$$\text{détermination}$$
$$GPAN = \frac{GPA'}{GPA' + GPB'}$$

$$\text{détermination}$$
$$GPA' = |APR - APA|$$
$$GPB' = |APR - APB|$$
— 112

```
encodage compressif
       GPAN
    → GPANC
```
— 113

## FIG.14

APR + GPB

GPB

APR

GPA

APA

POL = 1

APB

# FIG.15

```
                          ┌─────────────┐
                          │    GPAN     │
                          └──────┬──────┘
                                 │        130
                                 ▼      ╭─╯
        oui              ◇ GPAN ≤ TH1 ? ◇              non
    ┌─────────────────◇               ◇─────────────────┐
    ▼                                                    ▼
┌──────────────┐                              ┌──────────────┐
│  GPAN = 0    │                              │   ZMAP = 0   │
│  ZMAP = 1    │                              │              │
└──────┬───────┘                              └──────┬───────┘
   131─╯                                             ╰─132
       ▼                                             ▼
 ╭──────────────────╮               ╭────────────────────────────────────╮
 │ BSTR = ZMAP | STRC │             │ BSTR = ZMAP | GPANC | POL | STRC     │
 ╰──────────────────╯               ╰────────────────────────────────────╯
         ▲                                        ▲
        SICL                                     SICL
```

# FIG.16

```
                    ┌─────────────┐
                    │    GPAN     │
                    └─────────────┘
                           │
                           ▼
        ┌──────────────────────────────────────┐
        │  GPANC1 ≤ GPANC ≤ GPANC2             │──140
        └──────────────────────────────────────┘
              │                         │
              ▼                         ▼
    ┌──────────────────┐      ┌──────────────────┐
141─│    décodage      │      │    décodage      │──143
    │  décompressif    │      │  décompressif    │
    │    GPANC1        │      │    GPANC2        │
    └──────────────────┘      └──────────────────┘
              │                         │
              ▼                         ▼
        ┌───────────┐             ┌───────────┐
        │  GPAND1   │             │  GPAND2   │
        └───────────┘             └───────────┘
              │                         │
              ▼                         ▼
    ┌──────────────────┐      ┌──────────────────┐
    │  reconstruction  │      │  reconstruction  │
142─│    APRE 1 =      │      │    APRE 2 =      │──145
    │ GPAND1(APB-APA)  │      │ GPAND2(APB-APA)  │
    │      +APA        │      │      +APA        │
    └──────────────────┘      └──────────────────┘
              │                         │
              ▼                         ▼
    ┌──────────────────┐      ┌──────────────────┐
144─│ ERR1=│APR-APRE1│ │      │ ERR2=│APR-APRE2│ │──147
    └──────────────────┘      └──────────────────┘
              │                         │
              │     ┌─────────────┐     │
              └────▶│ détermination│◀────┘
                    │  erreur la  │
             148────│  plus faible│
                    └─────────────┘
                           │
                           ▼
        ┌──────────────────────────────────┐
        │         sélection                │
        │ GPANCS = GPANC1 ou GPANC2        │──149
        └──────────────────────────────────┘
```

# FIG.17

```
              ( GPAN )
                  |
                  v        150
          oui  /        \  non
         +----< GPAN ≤ TH1 ? >----+
         |     \        /         |
         v        \  /            v
   +-------------+           +-------------+
151│  GPAN = 0   │           │  ZMAP = 0   │152
   │  ZMAP = 1   │           +-------------+
   +-------------+                 |
         |                         v
         v
 (BSTR = ZMAP | STRC)   (BSTR = ZMAP | GPANCS | POL | STRC)
         ^                         ^
         |                         |
       SICL                      SICL
```

# FIG.18

GPA'

160

GPA' ≤ TH2 ?

oui      non

161 — GPA = 0
ZMAP = 1

ZMAP = 0 — 162

GPA' → GPAC — 163

BSTR = ZMAP | STRC

BSTR = ZMAP | GPAC | POL | STRC

SICL

SICL

# FIG.19

GPAC

GPAC1 ≤ GPAC ≤ GPAC2 —170

171— décodage décompressif GPAC1

décodage décompressif GPAC2 —173

GPAD1

GPAD2

172— reconstruction APRE 1
APRE 1 = APA+GPAD1 si POL = 0
APRE 1 = APA-GPAD1 si POL = 1

reconstruction APRE 2
APRE 2 = APA+GPAD2 si POL = 0
APRE 2 = APA-GPAD2 si POL = 1 —175

174— ERR1= | APR-APRE1 |

ERR2= | APR-APRE2 | —177

détermination erreur la plus faible
178—

sélection
GPACS = GPAC1 ou GPAC2 —179

# FIG.20

```
        ( GPA' )
           │
           ▼           180
        ╱ GPA' ≤ TH2 ? ╲
  oui  ╱                ╲  non
  ┌───╱                  ╲───┐
  │   ╲                  ╱   │
  ▼     ╲              ╱     ▼
┌──────────────┐      ┌──────────────┐
│   GPA = 0    │      │   ZMAP = 0   │──182
│   ZMAP = 1   │──181 │              │
└──────────────┘      └──────────────┘
  │                     │
  ▼                     ▼
( BSTR = ZMAP | STRC )  ( BSTR = ZMAP | GPACS | POL | STRC )
     ▲                       ▲
     │                       │
   SICL                    SICL
```

181 and GPA = 0 / ZMAP = 1

# FIG.21

```
      ╭─────────╮
      │  GPAN   │
      │   ou    │
      │ GPANC   │
      │   ou    │
      │  GPA'   │
      │   ou    │
      │  GPAC   │
      ╰─────────╯
           │
           ▼
( RAND )──▶( + )──190
```

# FIG.22

```
┌─────────────────────┐
│   réception BSTR     │───200          ╲ 3
└─────────────────────┘              ↙
          │
          ↓
┌─────────────────────┐
│   élaboration APR    │───201
│  pour grandeur physique │
└─────────────────────┘
          │
          ↓
      ╭─────────╮
      │  SIDL   │
      ╰─────────╯
          │
          ↓
      ╭─────────╮
      │   SID   │
      ╰─────────╯
```

# FIG.23

```
         210                           2
          │                            │
SB  ┌──────────────┐  SIM  ┌──────────────┐  SIC
───▶│ pré-accentuation │──────▶│  compression  │────▶
    └──────────────┘       └──────────────┘


          3                          211
          │                            │
SIC ┌──────────────┐  SIM  ┌──────────────┐  SB
───▶│ décompression │──────▶│ désaccentuation │────▶
    └──────────────┘       └──────────────┘
```

# FIG.24

| (A) | (B) | (A) | (B) | (A) | (B) | (A) | (B) | (A) |
| (B) | (C) | (B) | (C) | (B) | (C) | (B) | (C) | (B) |
| (A) | (B) | (A) | (B) | (A) | (B) | (A) | (B) | (A) |
| (B) | (C) | (B) | (C) | (B) | (C) | (B) | (C) | (B) |

# FIG.25

(A) → [ 2 ] → SICA

(B) → [ 2 ] → SICB

(C) → [ 2 ] → SICC

Europäisches
Patentamt

European
Patent Office

Office européen
des brevets

**RAPPORT DE RECHERCHE EUROPEENNE**

Numéro de la demande

EP 16 18 2678

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | DRUGEON (PANASONIC) V: "TE12.3: Results for edge based prediction", 3. JCT-VC MEETING; 94. MPEG MEETING; 7-10-2010 - 15-10-2010; GUANGZHOU; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, no. JCTVC-C216, 1 octobre 2010 (2010-10-01), XP030007923, * page 1, alinéa 2 - page 2; figure 5 * ----- | 1,23,25, 46-48 | INV. H04N19/105 H04N19/593 H04N19/132 H04N19/136 H04N19/182 |
| X | SANCHEZ VICTOR: "Fast intra-prediction for lossless coding of screen content in HEVC", 2015 IEEE GLOBAL CONFERENCE ON SIGNAL AND INFORMATION PROCESSING (GLOBALSIP), IEEE, 14 décembre 2015 (2015-12-14), pages 1367-1371, XP032871867, DOI: 10.1109/GLOBALSIP.2015.7418422 * page 1368, alinéa III - page 1369, alinéa IV; figures 2,3 * ----- | 1-12, 14-36, 38-48 | |
| X | US 6 654 503 B1 (SUDHARSANAN SUBRAMANIA [US] ET AL) 25 novembre 2003 (2003-11-25) * colonne 3, ligne 12 - colonne 5, ligne 9; figure 1A * ----- -/-- | 1-12, 14-36, 38-48 | DOMAINES TECHNIQUES RECHERCHES (IPC) H04N |

Le présent rapport a été établi pour toutes les revendications

| Lieu de la recherche | Date d'achèvement de la recherche | Examinateur |
|---|---|---|
| Munich | 9 juin 2017 | Le Guen, Benjamin |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons

& : membre de la même famille, document correspondant

EPO FORM 1503 03.82 (P04C02)

Europäisches
Patentamt

European
Patent Office

Office européen
des brevets

**RAPPORT DE RECHERCHE EUROPEENNE**

Numéro de la demande

EP 16 18 2678

| | **DOCUMENTS CONSIDERES COMME PERTINENTS** | | | |
|---|---|---|---|---|
| Catégorie | Citation du document avec indication, en cas de besoin, des parties pertinentes | | Revendication concernée | CLASSEMENT DE LA DEMANDE (IPC) |
| A | ABDOLRAHMAN ATTAR ET AL: "An accurate gradient-based predictive algorithm for image compression", ADVANCES IN MOBILE COMPUTING AND MULTIMEDIA, ACM, 2 PENN PLAZA, SUITE 701 NEW YORK NY 10121-0701 USA, 8 novembre 2010 (2010-11-08), pages 374-377, XP058000886, DOI: 10.1145/1971519.1971582 ISBN: 978-1-4503-0440-5 * page 374, alinéa 2 - page 376, alinéa 4; figures 3,4,6 * ----- | | 1-48 | |
| A | US 2011/090956 A1 (YOUN JEONGNAM [US]) 21 avril 2011 (2011-04-21) * alinéa [0024] - alinéa [0037]; figures 3,7,12 * ----- | | 1-48 | |
| | | | | **DOMAINES TECHNIQUES RECHERCHES (IPC)** |

Le présent rapport a été établi pour toutes les revendications

| Lieu de la recherche | Date d'achèvement de la recherche | Examinateur |
|---|---|---|
| Munich | 9 juin 2017 | Le Guen, Benjamin |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons

& : membre de la même famille, document correspondant

EPO FORM 1503 03.82 (P04C02)

page 2 de 2

**ANNEXE AU RAPPORT DE RECHERCHE EUROPEENNE
RELATIF A LA DEMANDE DE BREVET EUROPEEN NO.**

EP 16 18 2678

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

09-06-2017

| Document brevet cité au rapport de recherche | Date de publication | Membre(s) de la famille de brevet(s) | Date de publication |
|---|---|---|---|
| US 6654503 B1 | 25-11-2003 | US 6654503 B1<br>US 2004071356 A1 | 25-11-2003<br>15-04-2004 |
| US 2011090956 A1 | 21-04-2011 | AUCUN | |

Pour tout renseignement concernant cette annexe : voir Journal Officiel de l'Office européen des brevets, No.12/82

EPO FORM P0460